(19) Europäisches Patentamt
European Patent Office
Office européen des brevets

(11) EP 4 786 136 A1

(12) **EUROPEAN PATENT APPLICATION**

(43) Date of publication:
**05.08.2026 Bulletin 2026/32**

(21) Application number: **25155788.0**

(22) Date of filing: **04.02.2025**

(51) International Patent Classification (IPC):
***B29C 45/00*** *(2006.01)* ***B29C 48/00*** *(2019.01)*
***C08J 11/06*** *(2006.01)* ***C08K 3/013*** *(2018.01)*
***C08K 3/04*** *(2006.01)* ***C08K 3/30*** *(2006.01)*
***C08K 5/00*** *(2006.01)* ***C08K 5/134*** *(2006.01)*
***C08K 5/3435*** *(2006.01)* ***C08K 5/3475*** *(2006.01)*
***C08K 5/526*** *(2006.01)* ***C08K 7/14*** *(2006.01)*
***C08L 67/02*** *(2006.01)* *C08G 63/183* *(2006.01)*

(52) Cooperative Patent Classification (CPC):
(C-Sets available)
**C08K 7/14; B29C 48/00; C08J 11/06; C08K 3/013; C08K 3/04; C08K 3/30; C08K 5/005; C08K 5/1345; C08K 5/3435; C08K 5/3475; C08K 5/526; C08L 67/02;** B29C 43/003; B29C 45/0001; C08G 63/183; (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Syensqo Specialty Polymers USA, LLC**
**Alpharetta, GA 30005-3914 (US)**

(72) Inventors:
- **VINCENT, Matthew R.**
  **Alpharetta (US)**
- **CARVELL, Lee**
  **Alpharetta (US)**
- **SHEMPER, Bianca Sadicoff**
  **Alpharetta (US)**

(74) Representative: **Ferri, Isabella**
**SYENSQO S.A.**
**Intellectual Assets Management**
**Viale Lombardia, 20**
**20021 Bollate (IT)**

# (54) SUSTAINABLE REINFORCED POLYESTER COMPOSITION

(57) A sustainable reinforced polyester composition (C) comprising at least one recycled polyethylene terephthalate (rPET), a glass filler, optionally an impact modifier, and optional additives, having a high recycled content and a product carbon footprint (PCF) of at most 1.30 kg $CO_2$ per kg of composition (C). The glass filler comprises recycled glass fiber, virgin glass fiber, glass flakes, or any combination thereof, preferably comprises or consist of recycled glass fiber. An article comprising or made from such a composition (C), in particular a component of a mobile electronic device.

EP 4 786 136 A1

(52) Cooperative Patent Classification (CPC): (Cont.)
C08K 2003/3036; C08L 2203/20; C08L 2205/16

C-Sets
**C08K 3/013, C08L 67/02;**
**C08K 3/04, C08L 67/02;**
**C08K 3/30, C08L 67/02;**
**C08K 5/005, C08L 67/02;**
**C08K 5/1345, C08L 67/02;**
**C08K 5/3435, C08L 67/02;**
**C08K 5/3475, C08L 67/02;**
**C08K 5/526, C08L 67/02;**
**C08K 7/14, C08L 67/02;**
**C08L 67/02, C08L 23/0884, C08K 7/14, C08K 5/005, C08K 3/04;**
**C08L 67/02, C08L 23/0884, C08K 7/14, C08K 5/1345, C08K 5/3435, C08K 5/3475, C08K 5/526, C08K 3/04;**
**C08L 67/02, C08L 23/0884, C08K 7/14, C08K 5/1345, C08K 5/3435, C08K 5/3475, C08K 5/526, C08K 3/30**

## Description

### CROSS-REFERENCE TO RELATED APPLICATION(S)

Not applicable.

### TECHNICAL FIELD

The present invention relates to a sustainable polyester composition including recycled PET and glass filler, such a composition having high recycled content and low product carbon footprint (PCF). Such a sustainable polyester composition is especially well suited for the manufacturing of mobile electronic device components.

### BACKGROUND

While virgin polymers offer high performance and reliability, there is growing concern over their environmental impact, particularly regarding the use of non-renewable resources and the generation of plastic waste. As a result, there is increasing interest in developing sustainable alternatives, such as biopolymers made from renewable resources and recycled polymers, which aim to reduce the reliance on virgin polymers and minimize their environmental footprint.

The use of sustainable materials and utilization of waste/recycled products in many commercial products has increased tremendously due to the environmental concern globally. The use of these sustainable materials helps in addressing global concern such as environmental pollution, global warming as well as climate change. The proper utilization of recycled materials can reduce humans needs on heavily relying on the finite petrol-sourced resources.

Poly(ethylene terephthalate), generally abbreviated PET, is a semi-aromatic thermoplastic polyester commonly produced by esterification reaction between terephthalic acid and ethylene glycol with water as a byproduct or by transesterification reaction between ethylene glycol and dimethyl terephthalate with methanol as a byproduct. PET is one of the most important industrial polymers because of its excellent properties as tensile impact strength, chemical resistance, processability, clarity and thermal stability. The main applications of PET are fibers for textiles, films and bottles. PET materials are typically manufactured using extrusion, injection molding and blow molding techniques.

As PET plays a prominent role in the field of the production of short-life packaging materials, the quantity of discarded PET is rapidly growing. A significant amount of PET ends up in the recycling stream, and PET is one of the most widely recycled plastics.

However, recycling of post-consumer PET is generally a complex process that involves separating opaque, colored and transparent components from each other as well as from containers made from different materials (e.g. polyethylene, polypropylene, PVC, etc.). Proper separation is critical as each of these materials can contaminate the PET stream and reduce the quality of the final sorted product. After separation, the used PET material is ground into flake, cleaned, and dried at temperatures between 140°C and 180°C. The flake may be used directly (for example in strapping and fiber extrusion) or further processed into pellets for film, sheet or bottle applications. For some applications the pellets may be further crystallized and solid- state polymerized at temperatures between 200°C and 220°C prior to use.

The recycled PET ["rPET"] may be obtained from primary, secondary (mechanical), and tertiary (chemical) methods of recycling.

Primary recycling, also known as re-extrusion, is a closed loop recycling. Primary recycling is cheap and can be easily done in factories. This method cannot be used for PET plastics that contain other wastes. One of the disadvantages of this recycling is that the material's properties will be deteriorated over time. A limited number of cycles, lower value of recycled products, little market demand, and high energy consumption are the main disadvantages of rPET obtained through primary recycling.

Mechanical recycling includes separating, cleaning, crushing waste, washing PET pieces, drying the cleaned particles, and finally extruding the PET particles. The presence of water or acid causes a decrease in molecular weight and leads to a reduction in the quality of recycled products. See for example M. Frounchi's 2011 article, "Studies on Degradation of PET in Mechanical Recycling" in Macromolecular Symposia, vol. 144, issue 1, pg. 465-469**.** However, this process has some drawbacks that must be considered. Firstly, the process can contaminate the recycled material, which could reduce the quality of the material and necessitate further processing to remove impurities such as food residue, labels, or adhesives. Secondly, melting and reforming PET waste can result in material degradation, limiting the number of times PET can be recycled into similar-quality products. For example, virgin PET ["vPET"] is ductile and boasts high elongation at break values of >80% which have been found to rapidly reduce when mechanically recycled. The sharp reduction in the properties of the material is due to deterioration thermo-oxidative and thermo-mechanical degradation of the chains as well as hydrolytic scission - see Schyns & Shaver's 2021 article, "Mechanical Recycling of Packaging Plastics: A review" in Macromolecular Rapid Communication vol. 42, 2000415**.** Thirdly, secondary PET recycling is energy-intensive, particularly during the melting and reforming stage, which can lead to increased greenhouse gas

emissions, contributing to climate change. Lastly, secondary PET recycling requires significant capital investment, particularly for food-grade applications, necessitating strict quality control measures. This can limit asset availability for PET recycling.

Chemical recycling, also called tertiary recycling, refers to the process of breaking down the PET polymer into its individual monomers that can be utilized to manufacture new PET products. In contrast to primary and secondary recycling approaches, chemical recycling presents numerous benefits. It increases sustainability by reducing greenhouse gas emissions by up to 50% compared to virgin PET production; it also can decrease greenhouse gas emissions by up to 80% by offering a carbon-neutral approach to PET production. Also, contaminated or degraded PET waste, which is not suitable for mechanical recycling, can be recycled through chemical recycling. Besides energy efficiency, high-quality PET monomers can be produced by chemical recycling. Different methods for chemical recycling of PET can be found in the article by Mahsa Babaei et al, J. (2024) "Chemical recycling of Polyethylene terephthalate: A mini-review", in Journal of Environmental Chemical Engineering, vol. 12, Issue 3, 112507**.**

Incorporating more rPET into longer lasting durable product markets and applications where the currently-used resins lack a similar recyclability or recycled-content option offers a compelling solution. Recycling of PET waste by producing durable products targeting other industries such as electrical, electronics, automotive applications would mean an important move towards a more circular economy and for rPET to be a sustainable alternative to new petroleum sourced plastics.

Historically, however, rPET has limitations which preclude its use in many of these types of applications. Indeed, rPET tends to undergo hydrolysis when it is reprocessed, which decreases its average molecular weight (MW). Other factors during PET's recycling can also contribute to MW loss, such as thermal exposure and shear degradation.

In the electrical, electronics, automotive industries, injection molding is the most common plastic processing method, which is the greatest barrier to using PET, the injection moldings of which are especially brittle and notch sensitive. Furthermore, the inevitable degradation (thermal and hydrolytic due to the large number of unstable ester groups) during the thermal reprocessing of PET flakes reduces the average molecular weight and increases the rate of crystallization and thus the amount of crystalline fraction in the recycled product accompanied with even lower impact resistance. rPET generally has inferior properties compared to virgin PET (vPET), making rPET unsuitable in high-end applications.

The recycled PET available for product manufacturing generally has inferior properties compared to virgin PET (e.g., reduced mechanical properties, impact resistance, and melt viscosity). This shrinks its useful scope compared to virgin PET.

As such, the replacement of virgin PET with recycled PET compositions still presents a significant challenge for polyester-based formulations intended for use in electronics industry, in particular in mobile electronic devices using thin-walled injection molded articles.

There is a need for reinforced polyester products that result in lower levels of greenhouse gas emissions. Additionally or alternatively, there is a need for reinforced polyester products that are more environmentally sustainable, i.e., have a lower environmental impact.

## SUMMARY

Embodiments of the present invention relate to sustainable reinforced polyester compositions and their use in making components or parts of mobile electronic devices that result in salable products having a reduced carbon footprint when subjected to a Life Cycle Assessment (LCA).

The reinforced polyester composition described herein have a carbon footprint that is reduced through use of recycled material(s) in place of conventional manmade 'virgin' materials.

Moreover, the reduction in the carbon footprint of such a polyester composition is achieved without sacrificing performance.

The various aspects of the present invention is set out in the appended set of claims.

The present invention aims to address several challenges, especially associated with the use of recycled PET [hereinafter "rPET"], by providing a sustainable polyester composition which has a low Product Carbon Footprint [hereinafter "PCF"], and preferably also a high recycled content while preserving good mechanical performance, particularly impact resistance, and mold shrinkage.

A first aspect of the invention relates to a sustainable reinforced polyester composition (C) [ hereinafter "composition (C)" ] which is particularly suitable as a molding composition.

A second aspect of the invention relates to a method for making the sustainable reinforced polyester composition (C).

A third aspect of the invention relates to an article comprising, or made from, the sustainable reinforced polyester composition (C), being shaped by extrusion molding, injection molding, and/or compression molding, preferably by injection molding. In particular, the article may be a component of a mobile electric device.

A further aspect of the invention relates to a mobile electric device comprising the article.

More precisions and details about various embodiments, advantages, and features of the invention will be more readily understood and appreciated by reference to the detailed description and examples.

## DETAILED DESCRIPTION

### Definitions

In the present descriptive specification, some terms are intended to have the following meanings.

In the present disclosure, the term "recurring unit" designates the smallest unit of a polymer which is repeating in the polymeric chain.

As used herein, the term "copolymer" encompasses a polymer which has two or more different types of recurring units. The term ’copolymer" thus includes ’terpolymer’.

As used herein, a virgin polymer (such as virgin PET) is a high-quality polymer that has not been previously used or processed. It is produced directly from the raw materials, generally derived from petroleum and/or biomass sources, followed by a polymerization process where small molecules, known as monomers, are chemically bonded to form long chains or networks, creating the polymer. Virgin polymers are characterized by their pure, unmodified state, which means they have not been subjected to any form of recycling or reprocessing. This purity ensures that the polymer retains its original mechanical and thermal properties, such as strength, flexibility, and resistance to temperature. Virgin polymers are widely used across various industries due to their consistent quality and performance. The predictable properties of virgin polymers make them particularly valuable in applications where specific material characteristics are crucial for the performance of the end products.

The term "post-consumer recycled" ["PCR"] material (e.g., polymer or glass filler) refers to a finished good that has been sold to an end user, or consumer, used and then recycled. Typical post-consumer materials (e.g., polymer or glass filler) generally include end-of-life finished goods. A PCR PET may provide a source of recycled PET used in the present composition. The term "post-industrial recycled" ["PIR"] material (e.g., polymer or glass filler), also known as "pre-consumer" recycled material, refers to a recycled material recovered from waste generated by manufacturing processes. That leads to the creation of a source of PIR material (e.g., polymer or glass filler) to be used in the present composition. For example, an article made of PET polymer may be discarded during its manufacture or before any use and not end up into a salable article, thereby forming PET scraps. If these PET scraps are ground, shredded, re-pelletized, purified by solvent extraction, or depolymerized and repolymerized, then used again in making same or new articles, the recycled PET will be referred to as PIR PET. Typical PIR materials may include, but is not limited to, whole articles, parts thereof, scraps thereof, off-specification articles. In other words, post-consumer recycled material (e.g., polymer or glass filler) refers to a recycled material recovered from end-of-life finished goods, while post-industrial recycled material (e.g., polymer or glass filler) refers to a recycled material recovered from waste material generated from a process that manufactures the finished goods.

As used herein, the term "product carbon footprint" ["PCF"] reflects the Global Warming Potential ["GWP"] of a product. The GWP is the total amount of $CO_2$ or other greenhouse gases, which occur during the whole life cycle of a product. The calculation of the GWP is based on international ISO standards such as ISO 14040 and ISO 14044 or ISO 14067, which are also the basis of the certification of the PCF in case it is applied. Greenhouse gas emissions can be measured using a Life Cycle Assessment (also referred to as a Life Cycle Analysis), as described in the ISO 14000 series of environmental management standards. According to these standards, Life Cycle Assessment (LCA) is a technique to assess environmental impact of a product or service by quantifying all inputs and outputs of material flows and assessing how these material flows affect the environment. LCAs for products are conducted for the entire life cycle of a product; however, the life cycle of a product can be broken into stages. The stage from raw material through manufacturing is referred to as "cradle-to-gate," and the stage after sale, including customer use and end of life, is referred to as "gate-to-grave" (or "gate to end-of-life"). Where a product is recycled, the stage after sale can be referred to as gate to cradle. A cradle-to-gate LCA takes into account all inputs and outputs of GHGs from all aspects of a product’s production, including raw material extraction, conversion of feed stocks into chemicals, transport of materials to factories, energy involved in fabricating the product, packaging, and production wastes and disposal. Thus, the type of materials as well as the amounts and weights of such materials used in a product all contribute to the carbon footprint of a product.

As used herein, the term "mobile electronic device" is intended to denote an electronic device that is designed to be conveniently carried by a person, such as hand-held, worn on a wrist or on a nose bridge, carried in a carrier such as a case, briefcase, wallet, purse, or worn or affixed in and/or on a piece of clothing, etc, and used in various locations.

In the present specification, the choice of an element from a group of elements (such as a Markush group) also explicitly describes:

- the choice of two or the choice of several elements from the group,
- the choice of an element from a subgroup of elements consisting of the group of elements from which one or more

elements have been removed.

In the passages of the present specification which will follow, any description, even though described in relation to a specific embodiment, is applicable to and interchangeable with other embodiments of the present disclosure. Each embodiment thus defined may be combined with another embodiment, unless otherwise indicated or clearly incompatible. In addition, it should be understood that the elements and/or the characteristics of a polymer, a reaction medium, a composition, a solution, a product or article, a process or a use, described in the present specification, may be combined in all possible ways with the other elements and/or characteristics of the polymer, reaction medium, composition, solution, product or article, process or use, explicitly or implicitly, this being done without departing from the scope of the present description.

In the present application, where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components. Any element or component recited in a list of elements or components may be omitted from such list. Further, it should be understood that elements, embodiments, and/or features of processes or methods described herein can be combined in a variety of ways without departing from the scope and disclosure of the present teaching, whether explicit or implicit herein.

In the present specification, the description of a range of values for a variable, defined by a bottom limit, or by a top limit, or by a bottom limit and a top limit, also comprises the embodiments where the variable is chosen, respectively, within the range of values: excluding the bottom limit, or excluding the top limit, or excluding the bottom limit and the top limit. Any recitation herein of numerical ranges by endpoints includes all numbers subsumed within the recited ranges as well as the endpoints of the range and equivalents.

The term "comprising" (or "comprise") includes "consisting essentially of" (or "consist essentially of") and also "consisting of" (or "consist of").

The term "consisting essentially of" in relation to a polymer, composition, product, polymer, solution, process, method, etc. is intended to mean that any additional element or feature which may not be explicitly described herein and which does not materially affect the basic and novel characteristics of such a polymer, composition, product, polymer, solution, process, method, etc. can be included in such an embodiment. For example, when a polymer, composition, compound, product, polymer, or solution "consists essentially of" required elements, it is generally understood that any additional element may be present in not more than 1 wt. % based on the total weight of the polymer, composition, compound, product, polymer, solution, etc. or not more than 1 mol% based on the total number of moles of the polymer, composition, compound, product, polymer or solution. In the particular context of polymer (such as rPET), the expression 'consisting essentially of' is used for defining constituents of the polymer to take into account end chains, defects, irregularities and monomer rearrangements which might be comprised in said polymer in minor amounts, without this modifying essential properties of the polymer.

The use of the singular 'a' or 'one' herein means "at least one" and includes the plural unless specifically stated otherwise.

The disclosure of all patent applications, and publications cited herein are hereby incorporated by reference, to the extent that they provide exemplary, procedural or other details supplementary to those set forth herein. Should the disclosure of any patents, patent applications, and publications which are incorporated herein by reference conflict with the description of the present application to the extent that it may render a term unclear, the present description shall take precedence.

**COMPOSITION (C)**

The sustainable reinforced polyester composition (C) according to the present invention comprises the following components:

- at least one recycled PET [component (i)],
- from 5 wt. % to 60 wt. % of a glass filler [component (ii)] selected from the group consisting of

    (iia) recycled glass fiber,
    (iib) virgin glass fiber,
    (iic) glass flake, and
    any combination thereof,

- from 0 wt. % to 15 wt. % of at least one impact modifier [component (iii)], and
- from 0 wt. % to 15 wt. % at least one additive [component (iv)] different from the components (i), (ii) and (iii),

wherein the composition (C) has a recycled content of at least 30 wt. %, or at least 35 wt. %, or at least 38 wt. %, or at least 40 wt. %, or at least 43 wt. %, or at least 45 wt. %, or at least 50 wt. %, or at least 55 wt. %, or at least 60 wt. %, or at least 65 wt. %, or at least 70 wt. %, or at least 75 wt. %, or at least 80 wt. %, or at least 85 wt. %;

wherein the composition (C) has a product carbon footprint (PCF) of at most 1.30 kg $CO_2$/kg, or at most 1.28 kg $CO_2$/kg, at most 1.26 kg $CO_2$/kg, at most 1.25 kg $CO_2$/kg, at most 1.24 kg $CO_2$/kg, at most 1.23kg $CO_2$/kg, at most 1.22 kg $CO_2$/kg, at most 1.21 kg $CO_2$/kg, at most 1.20 kg $CO_2$/kg, at most 1.19 kg $CO_2$/kg,, or at most 1.18 kg $CO_2$/kg, at most 1.17 kg $CO_2$/kg, or at most 1.16 kg $CO_2$/kg, at most 1.15 kg $CO_2$/kg, or at most 1.14 kg $CO_2$/kg, at most 1.15 kg $CO_2$/kg, or at most 1.14 kg $CO_2$/kg, or at most 1.13 kg $CO_2$/kg, or at most 1.12 kg $CO_2$/kg, or at most 1.115 kg $CO_2$/kg or at most 1.110 kg $CO_2$/kg, or at most 1.105 kg $CO_2$/kg, or at most 1.10 kg $CO_2$/kg,
wherein said wt. % of each component and recycled content is based on the total weight of the composition (C); and wherein the combined weights from the components (i), (ii), (iii) and (iv) is less than or equal to 100 wt. % based on the total weight of the composition (C).

A particular composition (C) may comprise the following components:

- from 35 wt. % to 92 wt. % of the component (i),
- from 10 wt. % to 60 wt. % of the component (ii) selected from the group consisting of (iia) recycled glass fiber, (iib) virgin glass fiber, (iic) glass flake, and any combination thereof,
- from 0 wt. % to 15 wt. % of the component (iii), and
- from 0 wt. % to 15 wt. % of one or more components (iv) different than the components (i), (ii) and (iii),

wherein the composition (C) has a PCF of at most 1.29 kg $CO_2$/kg, and a recycled content of at least 35 wt. %, wherein said wt. % of each component and recycled content is based on the total weight of the composition (C); and wherein the combined weights from the components (i), (ii), (iii) and (iv) is less than or equal to 100 wt. % based on the total weight of the composition (C).

Another particular composition (C) may comprise the following components:

- from 38 wt. % to 90 wt. % of the component (i),
- from 10 wt. % to 60 wt. % of the component (ii) selected from the group consisting of (iia) recycled glass fiber, (iib) virgin glass fiber, (iic) glass flake, and any combination thereof,
- from 0 wt. % to 15 wt. % of the component (iii), and
- from 0 wt. % to 15 wt. % of one or more components (iv) different than the components (i), (ii) and (iii),

wherein the composition (C) has a PCF of at most 1.28 kg $CO_2$/kg and a recycled content of at least 38 wt. %; wherein said wt. % of each component and recycled content is based on the total weight of the composition (C); and wherein the combined weights from the components (i), (ii), (iii) and (iv) is less than or equal to 100 wt. % based on the total weight of the composition (C).

Yet another particular composition (C) may comprise the following components:

- from 40 wt. % to 90 wt. % of the component (i),
- from 10 wt. % to 60 wt. % of the component (ii) selected from the group consisting of (iia) recycled glass fiber, (iib) virgin glass fiber, (iic) glass flake, and any combination thereof,
- from 0 wt. % to 15 wt. % of the component (iii), and
- from 0 wt. % to 15 wt. % of one or more components (iv) different than the components (i), (ii) and (iii),

wherein the composition (C) has a PCF of at most 1.27 kg $CO_2$/kg and a recycled content of at least 40 wt. %, wherein said wt. % of each component and recycled content is based on the total weight of the composition (C); and wherein the combined weights from the components (i), (ii), (iii) and (iv) is less than or equal to 100 wt. % based on the total weight of the composition (C).

Still another particular composition (C) may comprise the following components:

- from 43 wt. % to 88 wt. % of the component (i),
- from 10 wt. % to 55 wt. % of the component (ii) selected from the group consisting of (iia) recycled glass fiber, (iib) virgin glass fiber, (iic) glass flake, and any combination thereof,

- from 2 wt. % to 15 wt. % of the component (iii), and
- from 0 wt. % to 15 wt. % of one or more components (iv) different than the components (i), (ii) and (iii),

wherein the composition (C) has a PCF of at most 1.25 kg $CO_2$/kg and a recycled content of at least 43 wt. %; wherein said wt. % of each component and recycled content is based on the total weight of the composition (C); and wherein the combined weights from the components (i), (ii), (iii) and (iv) is less than or equal to 100 wt. % based on the total weight of the composition (C).

A preferred composition (C) may comprise the following components:

- from 48 wt. % to 88 wt. % of the component (i),
- from 10 wt. % to 50 wt. % of the component (ii) selected from the group consisting of (iia) recycled glass fiber, (iib) virgin glass fiber, (iic) glass flake, and any combination thereof,
- from 2 wt. % to 15 wt. % of the component (iii), and
- from 0 wt. % to 15 wt. % of one or more components (iv) different than the components (i), (ii) and (iii),

wherein the composition (C) has a PCF of at most 1.21 kg $CO_2$/kg and a recycled content of at least 48 wt. %, wherein said wt. % of each component and recycled content is based on the total weight of the composition (C); and wherein the combined weights from the components (i), (ii), (iii) and (iv) is less than or equal to 100 wt. % based on the total weight of the composition (C).

A more preferred composition (C) may comprise the following components:

- from 50 wt. % to 87 wt. % of the component (i),
- from 10 wt. % to less than 48 wt. % of the component (ii) selected from the group consisting of (iia) recycled glass fiber, (iib) virgin glass fiber, (iic) glass flake, and any combination thereof,
- from 3 wt. % to 15 wt. % of the component (iii), and
- from 0.1 wt. % to 15 wt. % of one or more components (iv) different than the components (i), (ii) and (iii),

wherein the composition (C) has a PCF of at most 1.20 kg $CO_2$/kg and a recycled content of at least 50 wt. %, wherein said wt. % of each component and recycled content is based on the total weight of the composition (C); and wherein the combined weights from the components (i), (ii), (iii) and (iv) is less than or equal to 100 wt. % based on the total weight of the composition (C).

Yet a more preferred composition (C) may comprise the following components:

- from 50 wt. % to less than 86 wt. % of the component (i),
- from 10 wt. % to less than 46 wt. % of recycled glass fiber as component (iia);
- from 4 wt. % to 15 wt. % of the component (iii), and
- from 0.1 wt. % to 10 wt. % of one or more components (iv),

wherein the composition (C) has a PCF of at most 1.18 kg $CO_2$/kg and a recycled content of at least 50 wt. %., wherein said wt. % of each component and recycled content is based on the total weight of the composition (C); and wherein the combined weights from the components (i), (ii), (iii) and (iv) is less than or equal to 100 wt. % based on the total weight of the composition (C).

**Properties of Composition (C)**

Use of rPET and optionally furthermore of recycled glass fiber lowers the environmental footprint of the composition (C) and improves the overall life-cycle analysis.

The recycled content in the composition (C) is of at least 30 wt. %, or at least 35 wt. %, or at least 38 wt. %, or at least 40 wt. %, or at least 43 wt. %, or at least 45 wt. %, or at least 50 wt. %, or at least 55 wt. %, or at least 60 wt. %, or at least 65 wt. %, or at least 70 wt. %, or at least 75 wt. %, or at least 80 wt. %, or at least 85 wt. %, wherein said wt. % of recycled content is based on the total weight of the composition (C).

The composition (C) has a PCF of at most 1.30 kilograms of $CO_2$ per kilogram of the composition (C) ["kg $CO_2$/kg"], or at most 1.28 kg $CO_2$/kg, or at most 1.26 kg $CO_2$/kg, or at most 1.25 kg $CO_2$/kg, or at most 1.24 kg $CO_2$/kg, or at most 1.23kg $CO_2$/kg, or at most 1.22 kg $CO_2$/kg, or at most 1.21 kg $CO_2$/kg, or at most 1.20 kg $CO_2$/kg, or at most 1.19 kg $CO_2$/kg, or at most 1.18 kg $CO_2$/kg, preferably at most 1.17 kg $CO_2$/kg, or at most 1.16 kg $CO_2$/kg, more preferably at most

1.15 kg $CO_2$/kg or at most 1.14 kg $CO_2$/kg, even more preferably at most 1.15 kg $CO_2$/kg or at most 1.14 kg $CO_2$/kg, still even more preferably at most 1.13 kg $CO_2$/kg or at most 1.12 kg $CO_2$/kg, yet even more preferably at most 1.115 kg $CO_2$/kg or at most 1.110 kg $CO_2$/kg, and most preferably, at most 1.105 kg $CO_2$/kg or at most 1.10 kg $CO_2$/kg.

The composition (C) may have a PCF of at least 0.64 kg $CO_2$/kg, or at least 0.66 kg $CO_2$/kg, or at least 0.68 kg $CO_2$/kg, or at least 0.70 kg $CO_2$/kg, or at least 0.72 kg $CO_2$/kg, or at least 0.74 kg $CO_2$/kg, or at least 0.76 kg $CO_2$/kg, or at least 0.78 kg $CO_2$/kg, or at least 0.80 kg $CO_2$/kg, or at least 0.82 kg $CO_2$/kg, or at least 0.84 kg $CO_2$/kg, or at least 0.86 kg $CO_2$/kg, or at least 0.88 kg $CO_2$/kg, or at least 0.90 kg $CO_2$/kg, or at least 0.92 kg $CO_2$/kg, preferably at least 0.94 kg $CO_2$/kg or at least 0.95 kg $CO_2$/kg, or at least 0.96 kg $CO_2$/kg g or at least 0.97 kg $CO_2$/kg, or at least 0.98 kg $CO_2$/kg or at least 0.99 kg $CO_2$/kg, or at least 1.00 kg $CO_2$/kg.

When the composition (C) does not comprise an impact modifier (component (iii)), the composition (C) may have a PCF of from 0. 64 kg $CO_2$/kg to 1.30 kg $CO_2$/kg, preferably from 0. 66 kg $CO_2$/kg to 1.28 kg $CO_2$/kg, more preferably from 0. 66 kg $CO_2$/kg to 1.26 kg $CO_2$/kg.

When the composition (C) comprises from 5 to 15 wt.% of at least one impact modifier (component (iii)), the composition (C) may have a PCF of from 0. 64 kg $CO_2$/kg to 1.28 kg $CO_2$/kg, preferably from 0. 66 kg $CO_2$/kg to 1.27 kg $CO_2$/kg, more preferably from 0. 66 kg $CO_2$/kg to 1.26 kg $CO_2$/kg.

In particular, the composition (C) may have :

- a PCF of at most 1.28 kg $CO_2$/kg and a recycled content of at least 38 wt. %;
- a PCF of at most 1.27 kg $CO_2$/kg and a recycled content of at least 40 wt. %;
- a PCF of at most 1.25 kg $CO_2$/kg and a recycled content of at least 43 wt. %;
- a PCF of at most 1.21 kg $CO_2$/kg and a recycled content of at least 48 wt. %;
- a PCF of at most 1.18 kg $CO_2$/kg and a recycled content of at least 50 wt. %;
- a PCF of at most 1.17 kg $CO_2$/kg and a recycled content of at least 60 wt. %;
- a PCF of at most 1.155 kg $CO_2$/kg and a recycled content of at least 64 wt. %;
- a PCF of at most 1.14 kg $CO_2$/kg and a recycled content of at least 68 wt. %;
- a PCF of at most 1.13 kg $CO_2$/kg and a recycled content of at least 70 wt. %;
- a PCF of most 1.12 kg $CO_2$/kg and a recycled content of at least 75 wt. %;
- a PCF of at most 1.115 kg $CO_2$/kg and a recycled content of at least 77 wt. %; or
- a PCF of at most 1.11 kg $CO_2$/kg and a recycled content of at least 80 wt. %.

When the composition (C) does not contain an impact modifier (component (iii)), the composition (C) may have at least one of the following properties:

- a tensile modulus from 5 to 30 GPa (measured using **ASTM D638- 2022**);
- a tensile strength at break from 60 to 275 MPa (measured using **ASTM D638- 2022**);
- a flexural modulus from 5 to 30 GPa (measured using **ASTM D790- 2017);**
- a unnotched impact of from 120 to 750 J/m (measured using **ASTM D4812-2019);**
- a shrinkage in mold direction of from 0.1 to 0.41 in/in % (measured using **ASTM D995- 2021);** and/or
- a shrinkage in transverse direction of from 0.10 to 1.07 in/in % (measured using **ASTM D995- 2021).**

When the composition (C) contains an impact modifier (component (iii)), the composition (C) may have at least one of the following properties:

- a tensile modulus from 4 to 25 GPa (measured using **ASTM D638- 2022);**
- a tensile strength at break from 70 to 240 MPa (measured using **ASTM D638- 2022);**
- a flexural modulus from 3.5 to 25 GPa (measured using **ASTM D790-2017);**
- a unnotched impact of from 270 -1300 J/m (measured using **ASTM D4812-2019);**
- a shrinkage in mold direction of from 0.10 to 0.65 in/in % (measured using **ASTM D995- 2021);** and/or
- a shrinkage in transverse direction of from 0.1 to 1.1 in/in % (measured using **ASTM D995- 2021).**

**Component (i): rPET**

As previously mentioned, the component (i) in the composition (C) is a recycled PET. The recycled PET is generally abbreviated as "rPET" in the present text.

As used herein, a rPET denotes any polymer of which at least 55 mol %, or at least 60 mol %, or at least 70 mol %, or at least 80 mol %, or at least 90 mol %, or at least 95 mol %, or at least 97 mol %, or at least 98 mol %, or all, of its recurring units are recurring units ($R_{PET}$) of formula (I):

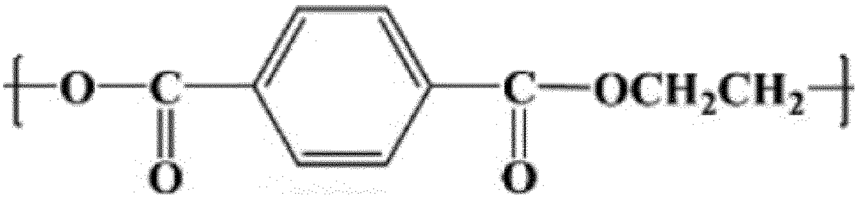

(I),

wherein the mol % is based on the total number of moles of recurring units in the rPET.

The rPET may be used in pellet and/or flake form, or reground form.

The composition (C) in accordance with the present disclosure may include rPET obtained from various sources. Suitable sources for rPET include post-industrial PET ("PIR PET"), post-consumer PET ("PCR PET"), regrind PET, and combinations thereof.

rPET may be obtained by a general process comprising selecting a PET from a PET waste residue, cleaning the PET, and processing the PET to generate PET flakes. In some instances, processing to generate PET flakes may occur before the cleaning step. The PET recycling process may further comprise the step of extruding the PET flakes to generate PET pellets.

The rPET may be any commercially available recycled PET.

The rPET may be food grade.

The rPET may be a post-consumer recycled PET, a post-industrial recycled PET, or any combination thereof.

The rPET may have a melting point (Tm) of approximately 225-260° C.

The rPET may have a glass transition temperature (Tg) of from 60°C to 100°C, preferably from 65°C to 100°C, more preferably from 70°C to 95°C.

The Tm and Tg of rPET are preferably measured by Differential Scanning Calorimetry (DSC).

Suitable but not limiting commercial rPETs includes post-consumer recycled Deja™ PCR-PET-CHIP-BP from Indorama Ventures, Thailand; post-consumer recycled Deja™ GR780 and GR784 from Indorama Ventures, France; post-consumer recycled PET polymer Perpetual® 80A available from DAK Americas LLC; post-consumer recycled PET1110CN available from rPlanet Earth; post-consumer recycled,food grade LNO™ from Phoenix Technologies, Ohio, USA; post-consumer recycled NLP from Phoenix Technologies, Ohio, USA; post-consumer recycled Eastlon CB-602R from Far Eastern New Centruy Corporation, Taiwan; post-industrial recycled BB-R from Zhejiang Jiaren New Materials Company, People's Republic of China; post-consumer recycled 8672 OBP from Heng Hiap Industries, Malaysia; post-consumer recycled PET from Buoyancy Plastics for Change Recycling Private Limited; post-consumer recycled SKYPET CR BB, CR BL, and CR SB from SK Chemical Corporation, Republic of Korea; and post-consumer recycled PET from Revalyu Recycling (India) Limited, India.

The content of the rPET in the composition (C) is at least 30 wt. %, or at least 35 wt. %, or at least 38 wt. %, or at least 40 wt. %, or at least 42 wt. %, or at least 43 wt. %, or at least 45 wt. %, or at least 48 wt. %, or at least 50 wt. %, or at least 55 wt. %, or at least 57 wt. %, or at least 59 wt. %, or at least 61 wt. %, or at least 63 wt. %, or at least 65 wt. %, or at least 68 wt. %, or at least 71 wt. %, or at least 73 wt. %, or at least 75 wt. %, said wt. % being based on the total weight of the composition (C).

The content of the rPET in the composition (C) is preferably at most or less than 92 wt. %, or at most 90 wt. %, or at most 89 wt. %, or at most 88 wt. %, or at most 87 wt. %, or at most 86 wt. %, or at most 85 wt. %, or at most 84 wt. %, based on the total weight of the composition (C).

**Component (ii): glass filler**

The composition (C) further comprises at least one glass filler as component (ii), in a weight amount which might be up to 55 wt. %, based on the total weight of the composition (C), although being generally at most 50 wt. %. In such an instance, the composition (C) includes at least 5 wt. % or at least 10 wt. % of the glass filler.

All glass types, such as A, AR, C, D, E, E-CR, M, S, R, T glass or any mixtures thereof or mixtures thereof may be used.

A, AR, C, D, E, E-CR, R, S (e.g., S-2) and T glass fibers are well known in the art. They are notably described in Additives for Plastics Handbook, 2001, 2nd edition, Murphy J., Chapter 5, pg. 43-48**, in** ASM Handbook, 2001, Wallenberger et al., vol. 21: Composites, pg. 27-34**, and in** Fiberglass and Glass Technology, Wallenberger, Frederick T.; Bingham, Paul A. (Eds.), 2010, XIV, chapter 5, pages 197-225**.** R, S and T glass fibers are composed essentially of oxides of silicon, aluminium and magnesium. In particular, those glass fibers comprise typically from 62-75 wt. % of $SiO_2$, from 16-28 wt. % of $Al_2O_3$ and from 5-14 wt. % of MgO. On the other hand, R, S and T glass fibers comprise less than 10 wt. % of CaO.

The glass fiber may include or consist of a high modulus glass fiber. High modulus glass fiber has an elastic

modulus of at least 76 GPa, preferably at least 78 GPa, more preferably at least 80 GPa, and most preferably at least 82 GPa as measured according to ASTM D2343. Examples of high modulus glass fibers include, but are not limited to, S, R, and T glass fibers. A commercially available source of high modulus glass fibers is S-1 and S-2 glass fibers from Taishan and AGY, respectively.

***Fibrous glass filler (iia), (iib)***

The glass filler preferably comprises fibrous glass filler which may serve as reinforcing agent for the composition (C), which includes, but are not limited to, (iia) recycled glass fiber, (iib) virgin glass fiber, or mixture thereof.

Virgin glass fibers are manufactured from raw materials such as silica sand, limestone, and soda ash. These materials are melted at high temperatures to form a molten glass, which is then extruded through fine nozzles to create fibers.

Recycled glass fibers may be produced by grinding down waste glass into fine particles and then melting them down to form fibers, similar to the process used for creating virgin glass fibers. The source material for recycled fibers comes from post-consumer and post-industrial glass waste, such as bottles, windows, and other discarded glass items. This process not only diverts waste from landfills but also requires less energy compared to manufacturing virgin glass fibers.

Alternatively, recycled glass fibers may be produced by melt blending recovered, waste oxides in a manner identical to how virgin oxides would be melt blended to make virgin glass fiber.

When comparing with virgin glass fibers, recycled fibers often have a slightly lower mechanical performance due to the potential presence of impurities and variations in the glass composition. However, due to advancements in recycling technologies, the recycled glass fibers are increasingly competitive in terms of quality. Moreover, recycled fibers offer a significant environmental advantage by reducing the demand for raw materials and lowering the carbon footprint associated with their production, without significantly compromising on performance.

In general a fibrous glass filler or glass fiber, whether it being recycled or virgin, is considered herein to be a material having length, width and thickness, wherein the average length is significantly larger than both the width and thickness. Generally, such a material has an aspect ratio, defined as the ratio between the average length and the largest of the average width and average thickness of at least 5, at least 10, at least 20 or at least 50.

The morphology of the fibrous glass filler or glass fiber, whether it be recycled (iia) or virgin (iib), is not particularly limited. A glass fiber can have a circular cross-section ("round glass fiber") or a non-circular cross-section ("flat glass fiber"). Examples of suitable flat glass fiber include, but are not limited to, glass fibers having oval, elliptical and rectangular cross sections.

The recycled glass fiber (iia) is preferably round, however recycled flat glass fiber (iia) would also be suitable to be used in the composition (C) when they are commercially available.

The virgin glass fiber (iib) may be round or flat.

The recycled glass fiber (iia) and/or virgin glass fiber (iib) may have an average length of from 3 mm to 50 mm, or from 3 mm to 10 mm, from 3 mm to 8 mm, from 3 mm to 6 mm, or from 3 mm to 5 mm. Alternatively, the glass fiber (iia) and/or (iib) may have an average length of from 10 mm to 50 mm, from 10 mm to 45 mm, from 10 mm to 35 mm, from 10 mm to 30 mm, from 10 mm to 25 mm or from 15 mm to 25 mm. In such instances, the recycled glass fiber (iia) and/or virgin glass fiber (iib) may have an equivalent diameter of from 5 to 20 $\mu$m, preferably of from 5 to 15 $\mu$m and more preferably of from 5 to 10 $\mu$m.

When the component (ii) comprises recycled glass fiber (iia), such recycled glass fiber is preferably made from E-glass.

When the component (ii) comprises virgin glass fiber (iib), such virgin glass fiber may be made of D-glass, E-glass, ECR glass, S-glass, and/or R-glass, preferably made of S-glass, E-glass and/or E-CR glass.

Preferably, the component (ii) consists essentially of (iia) recycled glass fiber, a combination of of (iia) recycled glass fiber and (iic) glass flakes, or a combination of of (iia) recycled glass fiber and (iib) virgin glass fibers.

More preferably, the component (ii) consists of

- of recycled glass fiber (iia) made of E-glass, or
- of virgin glass fiber (iib) made of D-glass, E-glass, ECR glass, S-glass, and/or R-glass, preferably made of S-glass, E-glass and/or E-CR glass; or
- of a combination of recycled glass fiber (iia) made of E-glass and virgin glass fiber (iib) made of D-glass, E-glass, ECR glass, S-glass, and/or R-glass.

When the component (ii) comprises, or consists of, a combination of recycled glass fiber (iia) and virgin glass fiber (iib), the amount of recycled glass fiber (iia) is preferably greater than the amount of virgin glass fiber (iib) in the composition (C).

Suitable recycled glass fibers (iia) are commercially available. Particularly preferred, but not limiting, commercial recycled glass fibers (iia) are recycled round E-glass fibers OCV Sustaina PPS100 or OCV Sustaina PBT 100 from Owens Corning with a 100% mass balance PIR certification ; nominal chopped length of 4 mm (±1 mm) ; nominal diameter of 10 micron (± 1 micron); flat E-glass fiber CSG-3PA- 830 currently sold by Nittobo with a 100% mass balance PIR certification

Particularly preferred, but not limiting, commercial virgin glass fibers (iib) are virgin E-glass fiber ChopVantage® HP 3540 or ChopVantage® HP 3610 available from NEG; virgin E-CR glass fiber DS 3185-10N or virgin E-CR glass fiber DS 8800-11P available from 3B-Fiberglass; and virgin E-glass fiber 534A or virgin E-glass fiber 534H available from Jushi.

Nittobo had sold E-glass fiber CSG-3PA- 830 as virgin glass fiber (used in some of the examples), while currently (in fall 2024) this product is available with a 100% mass balance PIR certification.

***Non-fibrous glass filler***

The glass filler may comprise a non-fibrous glass filler, such as (iic) glass flakes.

The glass flakes may have an average thickness of from 0.4 micron to 10 microns. In some embodiments, the glass flakes may have an average thickness of from 0.4 micron up to 2 microns, or up to 1 micron.

The glass flakes may be glass flakes with C, E-CR or E glass.

When the component (ii) comprises glass flakes (iic), such glass flakes are preferably made from E-glass.

Suitable glass flakes with E or C glass are commercially available as GLASFLAKE® from NSG. E-glass flakes are particularly effective in preventing warpage and improving dimensional accuracy in precision parts made of thermoplastic polymers. FINEFLAKE™ glass flakes also commercially available from NSG with an average thickness of 0.4 to 1 microns are suitable for fine and thin molded products. The glass flakes may be granulated. For example, FLEKA® granulated glass flakes with E glass are commercially available from NSG.

Particularly preferred, but not limiting, commercial glass flakes (iic) are FINEFLAKE™ MEG160FY-M01 glass flake with an average thickness of less than 1 $\mu$m and particle size of 1 to 2000 $\mu$m and DURAFLAKE™ ultra-thin glass flakes with an average thickness of 0.35 $\mu$m and an average particle size of 140 $\mu$m, both from NSG.

When the component (ii) comprises, or consists of, a combination of recycled glass fiber (iia) and glass flakes (iic), the amount of recycled glass fiber (iia) is preferably greater than the amount of glass flakes (iic) in the composition (C).

**Component (iii): impact modifier**

The composition (C) may further comprise at least one impact modifier as component (iii), in a weight amount which might be up to 20 wt. %, based on the total weight of the composition (C), although being generally at most 15 wt. %.

Impact modifiers useful herein are not particularly limited, so long as they impart useful properties to the composition (C), such as sufficient tensile elongation at yield and break. For example, any rubbery low-modulus functionalized polyolefin impact modifier with a glass transition temperature lower than 0 °C is suitable for this invention.

Useful impact modifiers include polyolefins, preferably functionalized polyolefins.

Particularly suited impact modifiers include ethylene-higher alpha-olefin polymers and ethylene-higher alpha-olefin-diene polymers that are provided with reactive functionality by being grafted or copolymerized with suitable reactive carboxylic acids or their derivatives such as, for example, acrylic acid, methacrylic acid, maleic anhydride or their esters.

Examples of impact modifiers functionalized with maleic anhydride or their esters include maleated polypropylenes, maleated ethylene-propylene copolymers, maleated ethylene-hexene copolymers, maleated ethylene-octene copolymers, maleated copolymers of styrene (for example maleated styrene-ethylene-butadiene-styrene)) and maleic anhydride-functionalized ethylene-propylene copolymer rubber.

Particularly suitable impact modifiers functionalized with acrylic acid or methacrylic acid are selected from the group consisting of poly(ethylene-co-glycidylmethacrylate) copolymers, poly(ethylene-co-methyl(meth)acrylate-co-glycidyl acrylate) copolymers, poly(ethylene-co-n-butyl acrylate-co-glycidyl acrylate) copolymers and copolymers of styrene and glycidyl (meth)acrylates, poly(ethylene-co-n-butyl acrylate-co-glycidyl acrylate) copolymers as well as copolymers of styrene and glycidyl (meth)acrylates, preferably selected from poly(ethylene-co-glycidylmethacrylate) copolymers and/or poly(ethylene-co-methyl(meth)acrylate-co-glycidyl acrylate) copolymers; more preferably selected from poly(ethylene-co-glycidylmethacrylate) copolymers or poly(ethylene-co-methyl(meth)acrylate-co-glycidyl acrylate) copolymers.

Notable, non-limiting, examples of commercially available impact modifiers suitable for the composition (C) of the present invention, are for instance Lotader® AX8900 (E/MA/GMA), Lotader® AX8840 (E/GMA), and Lotader® AX8750 (E/BA/GMA) from Arkema (Bristol, PA, USA) which are, respectively, a poly(ethylene-co-methylacrylate-co-glycidyl acrylate) terpolymer (compirising structural units derived from 67 wt. % ethylene, 25 wt. % methylacrylate, and 8 wt. % glycidyl methacrylate); a poly(ethylene-co-glycidylmethacrylate) copolymer (comprising structural units derived from 92 wt. % ethylene and 8 wt. % glycidyl methacrylate); and a poly(ethylene-butyl acrylate- glycidyl methacrylate) terpolymer (compirising structural units derived from 70 wt. % ethylene, 25 wt. % butylacrylate, and 5 wt. % glycidyl methacrylate); or Igetabond® BF-E from Sumitomo Chemical also a poly(ethylene-co-glycidylmethacrylate) copolymer (comprising structural units derived from 88 wt. % ethylene and 12 wt. % glycidyl methacrylate).

Another example of a suitable impact modifier is commercially available from Dow Inc. (Midland, MI, USA) under the trade name Paraloid™ EXL 2314, which is a core-shell type acrylate based polymer comprised of a core primarily comprised of cross-linked poly(n-butyl acrylate) rubber and of a shell comprised primarily of a poly(methyl methacrylate)-poly(glycidyl methacrylate) copolymer.

When the composition (C) comprises an impact modifier (iii), the impact modifier is preferably an ethylene-based acrylate copolymer or terpolymer, or a core-shell type acrylate based polymer, being functionalized with glycidyl acrylate or methacrylate.

When the composition (C) comprises an impact modifier (iii), the impact modifier is more preferably an ethylene-based acrylate copolymer containing glycidyl methacrylate, such as of the type (E/GMA), (E/MA/GMA), and (E/BA/GMA), where E stands for ethylene, MA stands for methacrylate, GMA stands for glycidyl methacrylate and BA stands for butylacrylate.

The functionalized impact modifiers that may be used in the composition (C) of the present invention include those having a melt index in the range of about 0.5 to about 200 g/10 min.

Advantageous results have been obtained with poly(ethylene-co-glycidylmethacrylate) copolymers or poly(ethylene-co-alkyl(meth)acrylate-co-glycidyl acrylate) terpolymers.

When the composition (C) comprises one or more impact modifiers (iii), the total content of the one or more impact modifiers in the composition (C) is at least 3 wt. %, or at least 4 wt. %, or at least 5 wt. %, and/or below 20 wt. %, or at most 18 wt. %, or at most 15 wt. %, or at most 13 wt. %, or at most 10 wt. %, said wt. % being based on the total weight of the composition (C).

Preferably, the total content of the one or more impact modifiers in the composition (C) is from 3 wt.% to 15 wt. %, or from 5 wt.% to 15 wt. %, or from 5 wt.% to 10 wt. %, based on the total weight of the composition (C).

**Optional component(s) (iv)**

The composition (C) may consist essentially of (or even, may consist of) the components (i), (ii) and (iii).

Alternatively, the composition (C) may further comprise one or more optional components (iv).

Any optional component (iv) in the composition (C) is advantageously chosen from components which do not detrimentally affect the beneficial properties of the composition (C).

The selection of a particular additional component (iv), and its amount in the composition (C), may depend upon the end use envisioned for the composition (C).

When one or more optional component(s) (iv) are present in the composition (C), the total weight of the optional component(s) (iv), based on the total weight of the composition (C), may be at least 0.05 wt. %, or at least 0.1 wt. %, or at least 0.2 wt. %, based on the total weight of the composition (C). The total weight of the optional component(s) (iv) when present may be up to 15 wt. %, based on the total weight of the composition (C); it is however generally at most 10 wt. %, preferably at most 8 wt. %, more preferably at most 5 wt. %, still more preferably at most 3 wt. %, and yet even more preferably at most 1 wt. %.

The optional component (iv) in the composition (C) may be selected from the group consisting of

- non-glass fibers such as carbon fiber, inorganic fiber, organic fiber;
- nucleating agents;
- mineral fillers, such as talc, mica, kaolin, calcium carbonate, calcium silicate, wollastonite, or magnesium carbonate,
- thermally conductive fillers, in particular thermally conductive metallic oxide fillers, such as aluminum oxide, magnesium oxide or zinc oxide,
- surfactants;
- polymeric binders;
- crosslinking agents;
- chain extension agents, in particular functionalized polymers containing epoxides, carboxylic acid anhydrides, oxazolines such as 2,2'-bisoxazolines, or isocyanurates such as aliphatic and aromatic diisocyanates,
- coupling agents;
- anti-dripping agents;
- colorants (e.g., white pigments, colored pigments, black pigments such as carbon black, and dyes),
- ultraviolet light stabilizers,
- antioxidants,
- anti-hydrolysis agents,
- heat stabilizers,
- smoke suppressants,
- plasticizers,

- flow enhancers,
- mold release agents,
- antistatic agents,
- flame retardants,
- lubricants, and
- any combination thereof.

The composition (C) preferably further includes at least one component (iv) selected from the group consisting of

- colorants (e.g., white pigments, colored pigments, carbon black, dyes),
- UV stabilizers,
- antioxidants, and
- any combination thereof.

The composition (C) more preferably includes a combination of at least one UV stabilizer and at least one antioxidant, or a combination of at least one colorant and of at least one UV stabilizer, or a combination of at least one colorant and at least one antioxidant, or a combination of at least one colorant,
at least one UV stabilizer, and at least one antioxidant.

The polyester composition (C) may contain a blend of stabilizers that produce ultraviolet resistance and color stability. The combination of stabilizers may allow for articles to be produced that have bright and fluorescent colors. In addition, bright colored articles can be produced without experiencing significant color fading over time. For instance, the composition (C) may contain a combination of a benzotriazole stabilizer and a hindered amine stabilizer.

***Colorant***

The composition (C) may comprise at least one inorganic and/or organic colorant as an optional component (iv).

Such colorants are well known from the skilled person and may notably be chosen from but not limited to: white pigments such as titanium dioxide (rutile, anatase), barium sulfate, zinc sulfide, lithopone, titanium-zinc-mixed oxides, and any mixture thereof; black pigment such as carbon black; iron oxide pigments; chromium oxide green pigment; lead chromate molybdate pigments; cadmium pigments; mixed metal oxide pigments; and/or dyes such as ultramarine blue, phthalocyanines, anthraquinones.

When the optional colorant (iv) includes at least one pigment, the total concentration of pigments in the composition (C) according to the present invention is at least 0.1 wt. %, more preferably at least about 0.4 wt. %, based on the total weight of the composition (C), and/or at most 15 wt. %, more preferably at most 13 wt. %, still more preferably at most 10 wt. %, and most preferably at most 8 wt. %, based on the total weight of the composition (C). Excellent results may be obtained when a white pigment (such as ZnS, $TiO_2$) or a black pigment (such as carbon black) optionally with another colorant (e.g., a dye) are present in the composition (C) from 0.4 wt. % to 5.0 wt. %, based on the total weight of the composition (C).

The colorant may be added to the composition (C) by way of a colorant masterbatch. A polymeric carrier may be used to form the masterbatch into which the colorant is mixed prior to making the composition (C). Ideally, the polymeric carrier may be the same rPET in component (i) used in the composition (C), but the polymeric carrier may be different that the rPET, such as a virgin PET, another type of polyester (e.g., polybutylene terephthalate 'PBT', polyethylene naphthalate 'PEN'), a polyolefin, or other polymer preferably compatible with rPET.

In such instance when the polymeric carrier is not the rPET, the weight content (wt. %) of such a polymeric carrier in the composition (C) should be less than the weight content (wt. %) of the polymeric component (i) based on the total weight of the composition (C).

***Ultraviolet light stabilizers***

At least one ultraviolet (UV) light stabilizer may be employed in the composition (C) to absorb ultraviolet light energy. The expression "UV absorber" or "UV light stabilizer" or "UV stabilizer" is used within the context of the present invention according to its usual meaning, i.e. to designate an organic compound possessing absorption bands in the region ranging from 250 to 400 nm.

When present in the composition (C), the total concentration of UV stabilizers in the composition (C) may be from about 0.05 wt. % to about 4 wt. %, preferably from 0.1 to 1 wt. %, the wt. % being based on the entire weight of the composition (C).

The UV stabilizers include, but are not limited to, benzotriazole stabilizers, triazine stabilizers, benzophenone stabilizers, hindered amine stabilizers, cyanoacrylate stabilizers, salicylate stabilizers, benzoate stabilizers, oxanilide

stabilizers, acrylate or malonate stabilizers, oxamide stabilizers, and any combinations thereof.

The UV stabilizer when employed in the composition (C) is preferably selected from the group consisting of hydroxyphenyl benzotriazole, triazine absorbers, hindered amine stabilizers, and any combination thereof.

Many of the UV stabilizers are commercially available, for example under the tradenames TINUVIN®, CYASORB®, CHIMASSORB® and SANDUVOR®.

Suitable benzotriazoles may include, for instance, 2-(2-hydroxyphenyl)benzotriazoles, such as 2-(2-hydroxy-5-methylphenyl)benzotriazole; 2-(2-hydroxy-5-tert-octylphenyl)benzotriazole (Cyasorb® UV 5411 from Cytec); 2-(2-hydroxy-3,5-di-tert-butylphenyl)-5-chlorobenzo-triazole; 2-(2-hydroxy-3-tert-butyl-5-methylphenyl)-5-chlorobenzotriazole; 2-(2-hydroxy-3,5-dicumylphenyl)benzotriazole; 2,2'-methylenebis(4-tert-octyl-6-benzo-triazolylphenol); polyethylene glycol ester of 2-(2-hydroxy-3-tert-butyl-5-carboxyphenyl)benzotriazole; 2-[2-hydroxy-3-(2-acryloyloxyethyl)-5-methylphenyl]-benzotriazole; 2-[2-hydroxy-3-(2-methacryloyloxyethyl)-5-tert-butylphenyl]benzotriazole; 2-[2-hydroxy-3-(2-methacryloyloxyethyl)-5-tert-octylphenyl]benzotriazole; 2-[2-hydroxy-3-(2-methacryloyloxyethyl)-5-tert-butylphenyl]-5-chlorobenzotriazole; 2-[2-hydroxy-5-(2-methacryloyloxyethyl)phenyl]benzotriazole; 2-[2-hydroxy-3-tert-butyl-5-(2-methacryloyloxyethyl)phenyl]benzotriazole; 2-[2-hydroxy-3-tert-amyl-5-(2-methacryloyloxyethyl)phenyl]benzotriazole; 2-[2-hydroxy-3-tert-butyl-5-(3-methacryloyloxypropyl)phenyl]-5-chlorobenzotriazole; 2-[2-hydroxy-4-(2-methacryloyloxymethyl)phenyl]benzotriazole; 2-[2-hydroxy-4-(3-methacryloyloxy-2-hydroxypropyl)phenyl]benzotriazole; 2-[2-hydroxy-4-(3-methacryloyloxypropyl)phenyl]benzotriazole; and combinations thereof.

Exemplary benzophenone light stabilizers may likewise include 2-hydroxy-4-dodecyloxybenzophenone; 2,4-dihydroxybenzophenone; 2-(4-benzoyl-3-hydroxyphenoxy)ethyl acrylate (Cyasorb® UV 209 from Cytec); 2-hydroxy-4-n-octyloxy)benzophenone (Cyasorb® 531 from Cytec); 2,2'-dihydroxy-4-(octyloxy)benzophenone (Cyasorb® UV 314 from Cytec); hexadecyl-3,5-bis-tert-butyl-4-hydroxybenzoate (Cyasorb® UV 2908 from Cytec); 2,2'-thiobis(4-tert-octylphenolato)-n-butylamine nickel(II) (Cyasorb® UV 1084 from Cytec); 3,5-di-tert-butyl-4-hydroxybenzoic acid, (2,4-di-tert-butylphenyl)ester (Cyasorb® 712 from Cytec); 4,4'-dimethoxy-2,2'-dihydroxybenzophenone (Cyasorb® UV 12 from Cytec); and combinations thereof.

A preferred hydroxyphenyl benzotriazole UV stabilizer is Tinuvin® 234 available from BASF.

Hindered amine light stabilizers ("HALS") may be employed as UV stabilizer in the composition (C) to inhibit degradation of the polyester composition and thus extend its durability. Suitable HALS compounds may be derived from a substituted piperidine, such as alkyl-substituted piperidyl, piperidinyl, piperazinone, alkoxypiperidinyl compounds, and so forth. For example, the hindered amine may be derived from a 2,2,6,6-tetraalkylpiperidinyl.

The hindered amine UV stabilizer can be either a low molecular weight stabilizer or a high molecular weight stabilizer. The low molecular weight hindered amine stabilizers have a molecular weight of at most 900 g/mol, preferably at most 800 g/mol, more preferably of at most 700 g/mol, still more preferably at most 600 g/mol and most preferably of at most 500 g/mol g/mol.

When present in the composition (C), the total concentration of hindered amine UV stabilizers is at least 0.05 wt. %, more preferably at least 0.1 wt. %, still more preferably at least 0.15 wt. %, and most preferably at least 0.2 wt. %, and/or at most 3.5 wt. %, preferably at most 3 wt. %, more preferably at most 2.5 wt. %, still more preferably at most 2.0 wt. %, even more preferably at most 0.8 wt. % and most preferably at most 0.6 wt. %. The total concentration of hindered amine UV stabilizers may be particularly from 0.05 wt. % to 2 wt. %, preferably from about 0.1 wt. % to about 0.8 wt. %, most preferably from 0.2 wt. % to 0.6 wt. %. The wt. % is based on the entire weight of the composition (C).

Examples of low molecular weight hindered amine UV stabilizers are listed in Table 1 of US 2021/0139694 by H. Toshio (Solvay Specialty Polymers USA), while examples of high molecular weight hindered amine stabilizers are listed in Table 2 of US 2021/0139694**.**

***Antioxidant stabilizer***

At least one antioxidant stabilizer may be employed in the composition (C) and is sometimes referred to as "AO stabilizer" in the present description.

The antioxidant stabilizer may be selected from the group consisting of hindered phenol stabilizers, phosphite ester stabilizers, phosphonite stabilizers and thioether stabilizers.

Hindered phenol AO stabilizers are generally considered as "primary" antioxidants, which can be desirably used in conjunction with "secondary" antioxidants including, but not limited to, phosphite ester stabilizers, phosphonite stabilizers and thioether stabilizers.

Hindered phenol AO stabilizers are well known in the art and include phenolic hydroxide groups in which the hydroxide substituent is sterically hindered by one or more other groups including, but not limited to, a methyl group, a tertiary butyl group or a combination thereof. When present, the total concentration of hindered phenol AO stabilizers is at least 0.05 wt. %, preferably at least 0.1 wt. %, and/or at most 5 wt. %, more preferably at most 3 wt. %, still more preferably at most 2 wt. %, and most preferably at most 1 wt. %, said wt. % being based on the total weight of the composition (C). Preferably, the total concentration of hindered phenol AO stabilizers in the composition (C) is from 0.1 wt. % to 1 wt. %

based on the total weight of the composition (C). Examples of hindered phenol AO stabilizers are provided in Table 3 on pages 8-10 of US 2021/0139694 by H. Toshio (Solvay Specialty Polymers USA). A preferred hindered phenol AO stabilizer when employed in the composition (C) is tetrakis [methylene-3-(3,5-di-tert-butyl-4-hydroxyphenyl-propionate)] methane, also known as Irganox® 1010 available from BASF.

The organophosphorus compounds such as phosphite ester AO stabilizers and phosphonite AO stabilizers may be employed in the composition (C) that serve as secondary antioxidant to decompose peroxides and hydroperoxides into stable, non-radical products. Trivalent phosphite esters or phosphonites are particularly useful as antioxidant stabilizers. Monophosphite compounds (i.e., only one phosphorus atom per molecule) may be employed in certain embodiments of the present invention. Preferred monophosphites are aryl monophosphites contain $C_1$ to $C_{10}$ alkyl substituents on at least one of the aryloxide groups. These substituents may be linear (as in the case of nonyl substituents) or branched (such as isopropyl or tertiary butyl substituents). Non-limiting examples of suitable aryl monophosphites (or monophosphonites) may include tris(2,4-di-tert-butylphenyl) phosphite (Irgafos® 168, available from BASF); bis(2,4-di-tert-butyl-6-methylphenyl)ethyl phosphite (Irgafos® 38, available from BASF); and 2,2',2"-nitrilo[triethyltris(3,3'5,5'-tetra-tert-butyl-1,1'-biphenyl-2,2'-diyl) phosphate (Irgafos® 12, available from BASF). Aryl diphosphites or diphosphonites (i.e., contains at least two phosphorus atoms per phosphite molecule may also be employed in the stabilizing system and may include, for instance, distearyl pentaerythritol diphosphite, diisodecyl pentaerythritol diphosphite, bis(2,4 di-tert-butylphenyl) pentaerythritol diphosphite (Irgafos® 126 available from BASF). Suitable examples of phosphite ester stabilizers and phosphonate stabilizers are provided in Table 3 on page 10-12 and Table 4 on page 13 of US 2021/0139694 by H. Toshio (Solvay Specialty Polymers USA).

A preferred phosphite ester AO stabilizer when employed in the composition (C) is tris(2,4-di-tert-butylphenyl) phosphite (Irgafos® 168, available from BASF.

Thioether AO stabilizers refer to organosulfur compounds containing a -C-S-C group. Suitable examples of thioether AO stabilizers are provided in Table 5 on page 13 of US 2021/0139694 by H. Toshio (Solvay Specialty Polymers USA).

## METHOD FOR PREPARING THE COMPOSITION (C)

The composition (C) is advantageously prepared by any conventional mixing method.

The method for making the composition (C) preferably comprises melt-processing.

For example, the composition (C) is made by melt processing its components, preferably melt-blending. Any suitable melt-blending method may be used for combining the components of the composition (C): components (i) and (ii), optional component (iii) and any one or more optional components (iv). For example, all of the components may be fed into a melt mixer, such as single screw extruder or twin screw extruder, agitator, single screw or twin screw kneader, or Banbury mixer. The components can be added to the melt mixer all at once or gradually in batches. When its components are gradually added in batches, a part of the components may be first added and then melt-mixed with the remaining part of the components, which are subsequently added, until an adequately mixed composition (C) is obtained.

A particular method may comprise dry mixing the components of the composition (C) using a mechanical blender, then extruding the mixture into strands and chopping the strands into pellets. Accordingly, the individual components, commonly provided in the form of liquid, chips, flakes, fibers, pellets and/or powders, can be physically mixed together in an appropriate apparatus such as a mechanical drum tumbler and then optionally dried, if desired, preferably under vacuum or in a circulating air oven, to remove any liquid from the physical mixture so as to facilitate compounding; the composition may then be pelletized, for example by melt extrusion to form a strand which, upon solidification, can be broken up into chips or pellets.

It is not necessary to combine all components in a single operation; for example, a composition can be compounded first with the components (i), (ii) and optional component (iii), and melt blended with the desired amount of one or more optional components (iv) such as a colorant or a colorant masterbatch in a later operation.

A melt-blending method may be used for mixing polymeric components and non-polymeric components in the context of the present invention. For example, the polymeric component(s) (i, iii) and the non-polymeric component (ii) may be fed into a melt mixer, such as single screw extruder or twin screw extruder, agitator, single screw or twin screw kneader, or Banbury mixer, and the addition step may be addition of all components at once or gradual addition in batches. When the polymeric component(s) and non-polymeric component(s) are gradually added in batches, a part of the polymeric component(s) and/or non-polymeric components is first added, and then is melt-mixed with the remaining polymeric and non-polymeric components that are subsequently added, until an adequately-mixed composition (C) is obtained.

## USE OF COMPOSITION (C )

Another aspect of the present invention is directed to the use of the composition (C) according to the invention for making an article. Any of the various embodiments described in relation to the composition (C) and to any of its

components (including optional components) is equally applicable here.

## ARTICLE

Another aspect of the present invention is directed to an article comprising, or made from, the polymer composition (C) as above described. Any of the various embodiments described in relation to the composition (C) and to any of its components (including optional components) is equally applicable here.

Preferably, the article comprises more than 50 wt. % of the composition (C). The article may consist essentially of (or may even consist of) the composition (C).

The article may comprise one or more parts. More than 50 wt. % of at least one part of the article may consist of the composition (C). The article may comprise at least one part consisting essentially of (or even consisting of) the composition (C).

The article according to the present invention may be in the form of a fiber, a film, a tape, a sheet (which may be suitable for use in laminating and for coating applications) or a slab.

The article may be molded using the composition (C) by any process adapted to thermoplastics, e.g., extrusion molding, injection molding, blow molding, rotomolding, overmolding or compression molding.

A preferred method for making the article includes extrusion molding, injection molding, and/or compression molding, more preferably injection molding.

The article according to the present invention is preferably a component of a mobile electronic device.

Components of mobile electronic devices of interest herein include, but are not limited to, antenna windows, fitting parts, snap fit parts, mutually moveable parts, functional elements, operating elements, tracking elements, adjustment elements, carrier elements, frame elements, switches, connectors, cables, housings, and any other structural part other than housings as used in a mobile electronic devices, such as for example speaker parts.

In particular, the component of the mobile electronic device can be of a mounting component with mounting holes or other fastening device, including but not limited to, a snap fit connector between itself and another component of the mobile electronic device, including but not limited to, a circuit board, a microphone, a speaker, a display, a battery, a cover, a housing, an electrical or electronic connector, a hinge, a radio antenna, a camera module, a switch, or a switchpad.

The mobile electronic device component may also be a mobile electronic device housing. The "mobile electronic device housing" refers to one or more of the back cover, front cover, antenna housing, frame and/or backbone of a mobile electronic device. The housing may be a single article or comprise two or more components. A "backbone" refers to a structural component onto which other components of the device, such as electronics, microprocessors, screens, keyboards and keypads, antennas, battery sockets, and the like are mounted. The backbone may be an interior component that is not visible or only partially visible from the exterior of the mobile electronic device. The housing may provide protection for internal components of the device from impact and contamination and/or damage from environmental agents (such as liquids, dust, and the like). Housing components such as covers may also provide substantial or primary structural support for and protection against impact of certain components having exposure to the exterior of the device such as screens and/or antennas. The mobile electronic device housing may be selected from the group consisting of a mobile phone housing, an antenna housing, an antenna window, a tablet housing, a laptop computer housing, a tablet computer housing or a watch housing.

The electronic device component may include, for example, a radio antenna or a camera module. The radio antenna may be a WiFi antenna or an RFID antenna. In some instances, at least a portion of the radio antenna is disposed on the composition (C). Additionally or alternatively, at least a portion of the radio antenna may be displaced from the composition (C).

Any description related to a ’mobile’ electronic device component is equally applicable to an electronic device component (such as a housing, radio antenna or camera module) which is not ’mobile’, that is to say, which is part of an electronic device which is not carried or hand-held by a person.

## APPLICATIONS

Another aspect of the present invention is directed to a mobile electronic device comprising, or made from, the article as above described. Any of the various embodiments described in relation to the article, the composition (C) and to any of its components (including optional components) is equally applicable here.

The mobile electronic device may be non-wearable or wearable. A wearable mobile electronic device may be generally referred to as a "wearable".

Representative and non-limiting examples of mobile electronic devices may be selected from the group consisting of a mobile electronic phone, a smartphone, a personal digital assistant, a laptop computer, a tablet computer, a radio, a camera and camera accessories, a drone, a mobile speakerphone, a smart medical device, a micro-chip, a sports tracker, a wearable computing device (e.g., a smart watch, smart glasses and the like), headphones, earbuds and

other mobile earwear, a smart strap, a watch band, a calculator, a music player, a video player, an e-book reader, a global positioning system receiver, a gaming equipment such as a portable game console and console accessories, a hard drive and other electronic storage devices. Preferred mobile electronic devices include laptop computers, tablet computers, mobile electronic phones, smartphones, mobile speakerphones, smart medical devices, drones, headphones, earbuds and other mobile earwear, smart watches, smart eyewear, AR/VR/MR headsets, AR/VR/MR glasses and other AR/VR/MR devices.

A "wearable" refers to small mobile electronic devices, generally having computing capability, with wireless communications capability which can be worn on the human body, or even inside the human body.

When the article is a wearable or a component thereof, the wearable may be preferably selected from the group consisting of micro-chips, sports trackers, smart watches, smart glasses or other smart eye-wear, headphones, earbuds and other wearable ear-wear, a smart strap, a watch band, on-body cameras, heart rate meters, XR devices (e.g., Augmented Reality (AR) devices, Mixed Reality (MR) devices, Virtual Reality (VR) devices), such as head-mounted display (HMD), AR/VR/MR headsets, AR/VR/MR glasses, and industrial wearable equipment. The wearable is more preferably selected from the group consisting of smart watches, on-body cameras, smart eye-wear, XR devices (e.g., AR devices, MR devices, VR devices), such as head-mounted display (HMD), AR/VR/MR headsets, AR/VR/MR glasses.

When the article is a non-wearable mobile electronic device, the non-wearable device may be preferably selected from the group consisting of a mobile electronic phone, a smartphone, a personal digital assistant, a laptop computer, a tablet computer, a radio, a camera and camera accessories, a drone, a mobile speakerphone, a smart medical device, a calculator, a music player, a video player, an e-book reader, a global positioning system receiver, a gaming equipment such as a portable game console and console accessories, a hard drive and other electronic storage devices. Preferred non-wearable mobile electronic devices include laptop computers, tablet computers, mobile electronic phones, smartphones, mobile speakerphones, smart medical devices, drones, a radio, a camera and camera accessories, a drone, a mobile speakerphone, a smart medical device, a calculator, a music player, a video player, an e-book reader, and a global positioning system receiver.

The embodiments above are intended to be illustrative and not limiting. Additional embodiments are within the inventive concepts. In addition, although the present invention is described with reference to particular embodiments, those skilled in the art will recognized that changes can be made in form and detail without departing from the spirit and scope of the invention.

## EXAMPLES

The invention will now be described with reference to the following examples, whose purpose is merely illustrative and not intended to limit the scope of the invention. As used in the Examples, "E" denotes an example embodiment of the present invention and "CE" denotes a counter-example.

### Materials

- **rPET1:** post-consumer recycled PET polymer Deja™ PCR-PET-CHIP-BP from Indorama Ventures
- **rPET2:** post-consumer recycled PET polymer Perpetual® 80A available from DAK Americas LLC
- **rPET3:** recycled PET polymer PET1110CN available from rPlanet Earth
- **vPET:** virgin PET polymer RAMAPET N1 from Indorama
- **rGF1:** recycled round E-glass fibers OCV SustainA PPS100 from Owens Corning ; nominal chopped length of 4 mm ($\pm$1 mm) ; nominal diameter of 10 micron ($\pm$ 1 micron)
- **rGF2:** recycled E-glass fibers OCV Sustaina PBT 100 from Owen Corning
- **vGF:** flat virgin E-glass fiber CSG-3PA-830 purchased from Nittobo
- **IM1:** impact modifier -random ethylene-methyl acrylate- glycidyl methacrylate (E/MA/GMA) terpolymer - Lotader® AX8900 available from Arkema
- **AO1:** hindered phenol stabilizer /PhOH / anti-oxidant - tetrakis [methylene-3-(3,5-di-tert-butyl-4-hydroxyphenyl-propionate)] methane, also known as Irganox® 1010 available from BASF
- **AO2:** Stabilizer /P/ anti-oxidant - Tris(2,4-di-tert.-butylphenyl)phosphite, commercially, also known as Irgafos® 168 available from BASF
- **UV1:** UV stabilizer / anti-oxidant; high molecular weight UV absorber belonging to hydroxyphenyl benzotriazole class - Tinuvin® 234 available from BASF ; its chemical name is 2-(2H-Benzotriazol-2-yl)-4,6-bis(1-methyl-1-phenylethyl) phenol.
- **UV2:** UV stabilizer; hindered amine light stabilizer / anti-oxidant - Chimassorb 944 LD available from BASF (its chemical name is poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino])

- **PG.1:** Black pigment - Monarch® 800 carbon black powder available from Cabot - size = 16 nm
- **PG.2:** White pigment - Zinc Sulfide - White 7 - Sachtolith HD-S available from Venator

**Test Methods**

- Tensile properties measured using **ASTM D638-2022**
  Tensile modulus, tensile strength, and elongation at break were measured on 5 injection molded ASTM Type I tensile bars (total length of 165 mm, gauge length of 50 mm, testing section width of 12.7 mm, thickness of 3.2 mm) according to ASTM D638 using 0.2 in/min test speed to measure the tensile properties.
- Flexural properties measured using **ASTM D790-2017**
  Flexural modulus was measured on 5 injection molded, rectangular bars having dimensions of 3.2 mm thickness by 12.7 mm width by 125 mm length.
- Notched Izod impact strength - **ASTM D256-2015**
  Notched Izod impact strength was measured in J/m on 5 injection molded, rectangular bars having dimensions of 3.2 mm thickness by 12.7 mm width by 125 mm length.
- Unnotched Izod impact strength - **ASTM D4812-2019**
  Unnotched Izod impact strength was measured in J/m on 5 injection molded, rectangular bars having dimensions of 3.2 mm thickness by 12.7 mm width by 125 mm length.
- Mold shrinkage - **ASTM D955-2021**
  Mold shrinkage (mold shrinkage in Flow Direction (in/in %) and in Transverse Direction (in/in %)) was measured on 5 injection molded plaques with dimensions 60 mm width by 60 mm length by 2 mm thick.
- PCF - **ISO 14040-44, ISO 14067**
  In the present application, the carbon footprint calculations were performed according to the requirements and guidance given by **ISO 14040-44** using LCA software Simapro 9.5 in combination with Ecoinvent database V3.9 and method **IPCC 2021-AR6-100y,** the entirety of each being herein incorporated by reference, using a cradle-to-gate approach including all raw materials and process steps to the final product exiting a production site gate. PCF results reflect the situation at the time the data has been collected based on suppliers' primary data ( when available), LCA software databases, and publicly available datasets and are provided in kg $CO_2$ equivalents per 1 kg of product composition as the functional unit, without packaging.

The calculation of overall PCF of each composition (C) in the Examples was based on the weighted content "i" of each component and their respective PCFi as well as the impact associated with compounding operations according to following equation:

$$\text{overall PCF} = \Sigma\, i \bullet PCF_i$$

wherein the summation $\Sigma$ is over all the number of components and processes.

**Examples 1 to 30**

The components [vPET, rPET (i), rGF (iia), vGF (iib), impact modifier (iii) when used, stabilizers (iv) when used, pigment (iv) when used] for the various polyester compositions were fed to a ZSK-26mm co-rotating twin screw extruder using gravimetric feeders that were adjusted for each run to achieve the target blended compositions provided in **Tables 1 to 6.**

The polyester composition examples according to the invention contained rPET as component (i) and as component (ii): 10 to 30 wt.% glass fiber (either recycled (iia) or virgin (iib)), without either impact modifier or with 5, 10 or 15 wt. % impact modifier (IM1) for component (iii), and further with some additives as components (iv): UV light stabilizers (UV1, UV2), antioxidants (AO1, AO2), black or white pigment (PIG.1, PIG.2).

The amounts of all components except the pigments are provided in wt.% based on the entire weight of each composition in **Tables 1-6.** The pigment content in each composition is provided in parts per hundred (pph), based on 100 parts of each composition.

The amounts of pigments are provided in Tables 1-6 in part per hundred ('pph') based on the combined weights of the polyester, the glass fiber, the impact modifier when used, the UV stabilizers and the antioxidants, when used. For black-colored compositions, the carbon black (PIG.1) was used in the amount of 0.5 pph, while for the white-colored compositions, ZnS (PIG.2) was used in the amount of 5 pph.

The polyester composition counter-examples CE1, CE22, CE26, CE30 contained vPET, instead of rPET.

**Table 1: Polyester compositions with flat virgin glass fibers (flat vGF) without impact modifier**

| Raw Materials | CE1 | E2 | E3 | E4 | E5 | E6 | E7 |
|---|---|---|---|---|---|---|---|
| **Composition** | *vPET Flat vGF-30* | rPET2 Flat vGF-30 | rPET1 Flat vGF-10 | rPET1 Flat vGF-20 | rPET1 Flat vGF-30 | rPET1 FLAT vGF-30 | rPET3 FLAT vGF-30 |
| vPET, wt. % | 70 | | | | | | |
| (i) rPET1, wt.% | | | 89 | 79 | 69 | 69 | |
| (i) rPET2, wt. % | | 70 | | | | | |
| (i) rPET3, wt. % | | | | | | | 69 |
| (ii) vGF, wt.% | 30 | 30 | 10 | 20 | 30 | 30 | 30 |
| (iv) AO1, wt. % | | | 0.3 | 0.3 | 0.3 | 0.3 | 0.3 |
| (iv) AO2, wt. % | | | 0.3 | 0.3 | 0.3 | 0.3 | 0.3 |
| (iv) UV1, wt. % | | | 0.2 | 0.2 | 0.2 | 0.2 | 0.2 |
| (iv) UV2, wt. % | | | 0.2 | 0.2 | 0.2 | 0.2 | 0.2 |
| (iv) PIG.1, pph | 0.4 | 0.4 | 0.4 | 0.4 | 0.4 | | |
| (iv) PIG. 2, pph | | | | | | 5 | 5 |
| **Properties** | | | | | | | |
| Recycled content, wt. % | ***0*** | **70** | **89** | **79** | **69** | **69** | **69** |
| PCF, kg $CO_2$/kg | ***1.987*** | **1.063** | **0.997** | **1.043** | **1.089** | **1.084** | **1.077** |
| Tensile modulus GPa | 10.8 | 11.1 | 5.49 | 8.20 | 11.5 | 11.8 | 12.1 |
| Tensile Strength at break, MPa | 160 | 157 | 77 | 117 | 163 | 157 | 164 |
| Tensile Elongation at break, % | 2.4 | 2.3 | 1.6 | 1.8 | 2.1 | 1.9 | 2.0 |
| Flexural modulus, GPa | 10.8 | 10.5 | 5.43 | 8.07 | 10.8 | 11.2 | 11.7 |
| Notched Izod impact strength (complete break), J/m | 75 | 68 | 35 | 58 | 83 | 76 | 75 |
| Unnotched Izod impact strength (complete break), J/m | 566 | 494 | 177 | 275 | 452 | 426 | 509 |
| Shrinkage Mold Direction (in/in) | 0.25 | - | 0.40 | 0.20 | 0.12 | - | - |
| Shrinkage Transverse Direction (in/in) | 0.48 | - | 0.96 | 0.71 | 0.52 | - | - |

**Table 2: Polyester compositions with round recycled glass fibers without impact modifier**

| Raw Materials | E8 | E9 | E10 | E11 | E12 | E13 |
|---|---|---|---|---|---|---|
| **Composition** | rPET1 rGF1-10 | rPET1 rGF1-20 | rPET1 rGF1-30 | rPET1 rGF2-10 | rPET1 rGF2-20 | rPET1 rGF2-30 |
| (i) rPET1, wt.% | 89 | 79 | 69 | 89 | 79 | 69 |
| (ii) rGF1, wt.% | 10 | 20 | 30 | - | - | - |
| (ii) rGF2, wt.% | - | - | - | 10 | 20 | 30 |
| (iv) AO1, wt. % | 0.3 | 0.3 | 0.3 | 0.3 | 0.3 | 0.3 |
| (iv) AO2, wt. % | 0.3 | 0.3 | 0.3 | 0.3 | 0.3 | 0.3 |
| (iv) UV1, wt. % | 0.2 | 0.2 | 0.2 | 0.2 | 0.2 | 0.2 |

(continued)

| Raw Materials | E8 | E9 | E10 | E11 | E12 | E13 |
|---|---|---|---|---|---|---|
| (iv) UV2, wt. % | 0.2 | 0.2 | 0.2 | 0.2 | 0.2 | 0.2 |
| (iv) PIG.1, pph | 0.4 | 0.4 | 0.4 | 0.4 | 0.4 | 0.4 |
| **Properties** | | | | | | |
| Recycled content, wt. % | **99** | **99** | **99** | **99** | **99** | **99** |
| PCF, kg $CO_2$/kg | **0.972** | **0.993** | **1.014** | **0.972** | **0.993** | **1.014** |
| Tensile modulus GPa | 5.30 | 7.86 | 11.0 | 5.16 | 7.79 | 10.9 |
| Tensile Strength at break, MPa | 63 | 101 | 162 | 67 | 105 | 144 |
| Tensile Elongation at break, % | 1.3 | 1.6 | 2.3 | 1.5 | 1.7 | 1.9 |
| Flexural modulus, GPa | 5.27 | 7.58 | 10.8 | 5.07 | 7.72 | 10.7 |
| Notched Izod impact strength (complete break), J/m | 28 | 43 | 59 | 25 | 40 | 57 (4 breaks) |
| Unnotched Izod impact strength (complete break), J/m | 122 | 226 | 403 | 145 | 209 | 361 |
| Shrinkage Mold Direction (in/in) | 0.40 | 0.20 | 0.11 | | | 0.99 |
| Shrinkage Transverse Direction (in/in) | 1.07 | 0.97 | 0.93 | | | 0.99 |

**Table 3: PET compositions with virgin glass fibers (flat vGF) and impact modifier (IM1)**

| Raw Materials | E14 | E15 | E16 | E17 | E18 | E19 |
|---|---|---|---|---|---|---|
| **Composition** | rPET1 flat vGF-10 IM1-5 | rPET1 flat vGF-20 IM1-5 | rPET1 flat vGF-10 IM1-10 | rPET1 flat vGF-20 IM1-10 | rPET1 flat vGF-10 IM1-15 | rPET1 flat vGF-20 IM1-15 |
| (i) rPET1, wt.% | 84 | 74 | 79 | 69 | 74 | 64 |
| (ii) Flat vGF3, wt.% | 10 | 20 | 10 | 20 | 10 | 20 |
| (iii) IM1, wt. % | 5 | 5 | 10 | 10 | 15 | 15 |
| (iv) AO1, wt. % | 0.3 | 0.3 | 0.3 | 0.3 | 0.3 | 0.3 |
| (iv) AO2, wt. % | 0.3 | 0.3 | 0.3 | 0.3 | 0.3 | 0.3 |
| (iv) UV1, wt. % | 0.2 | 0.2 | 0.2 | 0.2 | 0.2 | 0.2 |
| (iv) UV2, wt. % | 0.2 | 0.2 | 0.2 | 0.2 | 0.2 | 0.2 |
| (iv) PIG.1, pph | 0.4 | 0.4 | 0.4 | 0.4 | 0.4 | 0.4 |
| **Properties** | | | | | | |
| Recycled content, wt. % | **84** | **74** | **79** | **69** | **74** | **64** |
| PCF, kg$CO_2$/kg | **1.039** | **1.085** | **1.081** | **1.127** | **1.123** | **1.169** |
| Tensile modulus GPa | 4.91 | 7.45 | 4.70 | 6.87 | 4.00 | 6.39 |
| Tensile Strength at break, MPa | 81 | 113 | 85 | 110 | 70 | 97 |
| Tensile Elongation at break, % | 2.1 | 2.1 | 3.5 | 3.2 | 4.1 | 3.5 |
| Flexural modulus, GPa | 4.71 | 7.17 | 4.38 | 6.42 | 4.1 | 3.5 |
| Notched Izod impact strength (complete break), J/m | 45 | 73 | 105 | 142 (2 breaks) | (no break) | (no break) |
| Unnotched Izod impact strength (complete break), J/m | 277 | 369 | 645 | 868 | 712 | 865 |

(continued)

| Properties | | | | | | |
|---|---|---|---|---|---|---|
| Shrinkage Mold Direction (in/in) | 0.42 | 0.25 | 0.49 | 0.27 | 0.62 | 0.32 |
| Shrinkage Transverse Direction (in/in) | 0.95 | 0.71 | 0.95 | 0.72 | 1.00 | 0.74 |

**Table 4: PET compositions with virgin glass fibers (flat vGF) and impact modifier (IM1)**

| Raw Materials | E20 | E21 | CE22 |
|---|---|---|---|
| **Composition** | rPET1<br>flat vGF-30<br>IM1-10 | rPET1<br>flat vGF-30<br>IM1-10 | *vPET*<br>*flat vGF-30*<br>*IM1-10* |
| vPET, wt. % | - | - | 59 |
| (i) rPET1, wt.% | 59 | 59 | |
| (ii) Flat vGF3, wt.% | 30 | 30 | 30 |
| (iii) IM1, wt. % | 10 | 10 | 10 |
| (iv) AO1, wt. % | 0.3 | 0.3 | 0.3 |
| (iv) AO2, wt. % | 0.3 | 0.3 | 0.3 |
| (iv) UV1, wt. % | 0.2 | 0.2 | 0.2 |
| (iv) UV2, wt. % | 0.2 | 0.2 | 0.2 |
| (iv) PIG.1, pph | | 0.4 | 0.4 |
| (iv) PIG.2, pph | 5 | | |
| **Properties** | | | |
| Recycled content, wt. % | **56.2** | **59** | *0* |
| PCF, $kgCO_2/kg$ | **1.167** | **1.173** | 1.869 |
| Tensile modulus GPa | 8.89 | 9.24 | 6.60 |
| Tensile Strength at break, MPa | 114 | 127 | 105 |
| Tensile Elongation at break, % | 3.2 | 3.1 | 3.1 |
| Flexural modulus, GPa | 11.2 | 8.50 | 6.10 |
| Notched Izod impact strength (complete break), J/m | (no break) | (no break) | (no break) |
| Unnotched Izod impact strength (complete break), J/m | 1057 | 1035 | 907 |
| Shrinkage Mold Direction (in/in) | - | 0.16 | 0.28 |
| Shrinkage Transverse Direction (in/in) | - | 0.56 | 0.68 |

**Table 5: PET compositions with recycled glass fibers (round rGF1) and impact modifier (IM1)**

| Raw Materials | E23 | E24 | E25 | CE26 |
|---|---|---|---|---|
| **Composition** | rPET1<br>rGF1-10<br>IM1-10 | rPET1<br>rGF1-20<br>IM1-10 | rPET1<br>rGF1-30<br>IM1-10 | vPET<br>rGF1-30<br>IM1-10 |
| vPET, wt. % | - | - | - | 59 |
| (i) rPET1, wt.% | 79 | 69 | 59 | - |
| (ii) Round rGF1, wt.% | 10 | 20 | 30 | 30 |
| (iii) IM1, wt. % | 10 | 10 | 10 | 10 |
| (iv) AO1, wt. % | 0.3 | 0.3 | 0.3 | 0.3 |

(continued)

| Raw Materials | E23 | E24 | E25 | CE26 |
|---|---|---|---|---|
| Composition | rPET1 rGF1-10 IM1-10 | rPET1 rGF1-20 IM1-10 | rPET1 rGF1-30 IM1-10 | vPET rGF1-30 IM1-10 |
| (iv) AO2, wt. % | 0.3 | 0.3 | 0.3 | 0.3 |
| (iv) UV1, wt. % | 0.2 | 0.2 | 0.2 | 0.2 |
| (iv) UV2, wt. % | 0.2 | 0.2 | 0.2 | 0.2 |
| (iv) PIG.1, pph | 0.4 | 0.4 | 0.4 | 0.4 |
| **Properties** | | | | |
| Recycled content, wt. % | **89** | **89** | **89** | 30 |
| PCF, $kgCO_2/kg$ | **1.056** | **1.077** | **1.098** | 1.869 |
| Tensile modulus GPa | 4.17 | 6.34 | 8.55 | 11.3 |
| Tensile Strength at break, MPa | 80 | 103 | 119 | 170 |
| Tensile Elongation at break, % | 4.1 | 3.9 | 4.1 | 2.8 |
| Flexural modulus, GPa | 4.01 | 6.09 | 8.27 | 10.4 |
| Notched Izod impact strength (complete break), J/m | 92 | 112 | 170 (1 break) | 72 |
| Unnotched Izod impact strength (complete break), J/m | 500 | 870 | 1155 | 657 |
| Shrinkage Mold Direction (in/in) | 0.65 | 0.25 | 0.15 | 0.12 |
| Shrinkage Transverse Direction (in/in) | 1.10 | 1.02 | 0.92 | 0.86 |

**Table 6: PET compositions with recycled glass fibers (round rGF2) and impact modifier (IM1)**

| Raw Materials | E27 | E28 | E29 | CE30 |
|---|---|---|---|---|
| Composition | rPET1 rGF2-10 IM1-10 | rPET1 rGF2-20 IM1-10 | rPET1 rGF2-30 IM1-10 | vPET rGF2-30 IM1-10 |
| vPET, wt. % | - | - | - | 59 |
| (i) rPET1, wt.% | 79 | 69 | 59 | - |
| (ii) Round rGF2, wt.% | 10 | 20 | 30 | 30 |
| (iii) IM1, wt. % | 10 | 10 | 10 | 10 |
| (iv) AO1, wt. % | 0.3 | 0.3 | 0.3 | 0.3 |
| (iv) AO2, wt. % | 0.3 | 0.3 | 0.3 | 0.3 |
| (iv) UV1, wt. % | 0.2 | 0.2 | 0.2 | 0.2 |
| (iv) UV2, wt. % | 0.2 | 0.2 | 0.2 | 0.2 |
| (iv) PIG.1, pph | 0.4 | 0.4 | 0.4 | 0.4 |
| **Properties** | | | | |
| Recycled content, wt. % | **89** | **89** | **89** | 30 |
| PCF, $kgCO_2/kg$ | **1.056** | **1.077** | **1.098** | 1.869 |
| Tensile modulus GPa | 4.06 | 6.04 | 8.41 | 8.70 |
| Tensile Strength at break, MPa | 73 | 97 | 114 | 115 |
| Tensile Elongation at break, % | 4.4 | 4.1 | 3.8 | 4.5 |
| Flexural modulus, GPa | 3.90 | 5.90 | 8.10 | 7.90 |

(continued)

| Properties | | | | |
|---|---|---|---|---|
| Notched Izod impact strength (complete break), J/m | 96 | 117 (3 breaks) | 160 (1 break) | no break |
| Unnotched Izod impact strength (complete break), J/m | 651 | 907 | 1158 | 1222 |
| Shrinkage Mold Direction (in/in) | - | - | 0.17 | 0.23 |
| Shrinkage Transverse Direction (in/in) | - | - | 1.02 | 0.78 |

The disclosure of all patent applications, and publications cited herein are hereby incorporated by reference, to the extent that they provide exemplary, procedural or other details supplementary to those set forth herein. Should the disclosure of any patents, patent applications, and publications which are incorporated herein by reference conflict with the description of the present application to the extent that it may render a term unclear, the present description shall take precedence. Any incorporation by reference of documents is limited such that no subject matter is incorporated that is contrary to the explicit disclosure herein.

All references, patents, applications, tests, standards, documents, publications, brochures, texts, articles, etc. mentioned herein are incorporated herein by reference.

While preferred embodiments of this invention have been shown and described, modifications thereof can be made by one skilled in the art without departing from the teaching of this invention. Where a numerical limit or range is stated, the endpoints are included. Also, all values and subranges within a numerical limit or range are specifically included as if explicitly written out.

The embodiments described herein are exemplary only and are not limiting. Many variations and modifications of compositions, articles, and methods are possible and are within the scope of the invention. Accordingly, the scope of protection is not limited by the description set out above, but is only limited by the claims which follow, that scope including all equivalents of the subject matter of the claims. Each and every claim is incorporated into the specification as an embodiment of the present invention. Thus, the claims are a further description and are an addition to the preferred embodiments of the present invention.

## Claims

**1.** A sustainable reinforced polyester composition [hereinafter "composition (C)"], comprising the following components:

- at least one recycled PET [ component (i) ];
- from 5 wt. % to 60 wt. % of a glass filler [ component (ii) ] selected from the group consisting of

  (iia) recycled glass fiber,
  (iib) virgin glass fiber,
  (iic) glass flake, and
  any combination thereof;
  from 0 wt. % to 15 wt. % of at least one impact modifier [ component (iii) ]; and

- from 0 wt. % to 15 wt. % of at least one additive [ component (iv) ] different than the components (i), (ii) and (iii),
wherein the composition (C) has a product carbon footprint (PCF) of at most 1.30 kilograms of $CO_2$ per kilogram of composition (C) ["kg $CO_2$/kg"];
wherein the composition (C) has a recycled content of at least 30 wt. %, or at least 35 wt. %, at least 38 wt. %, or at least 40 wt. %, or at least 43 wt. %, or at least 45 wt. %, or at least 50 wt. %, or at least 55 wt. %, or at least 60 wt. %, or at least 65 wt. %, or at least 70 wt. %, or at least 75 wt. %, or at least 80 wt. %, or at least 85 wt. %, and
wherein said wt. % of each component and recycled content is based on the total weight of the composition (C), and
wherein the combined weights from the components (i), (ii), (iii) and (iv) is less than or equal to 100 wt. % based on the total weight of the composition (C).

**2.** The composition (C) according to claim 1, comprising the following components:

- from 38 wt. % to 90 wt. % of the component (i),

- from 10 wt. % to 60 wt. % of the component (ii) selected from the group consisting of (iia) recycled glass fiber, (iib) virgin glass fiber, (iic) glass flake, and any combination thereof,
- from 2 wt. % to 15 wt. % of the component (iii), and
- from 0 wt. % to 15 wt. % of one or more components (iv) different than the components (i), (ii) and (iii),

wherein the composition (C) has a PCF of at most 1.28 kg $CO_2$/kg and a recycled content of at least 38 wt. %, or

- from 40 wt. % to 90 wt. % of the component (i),
- from 10 wt. % to 55 wt. % of the component (ii) selected from the group consisting of (iia) recycled glass fiber, (iib) virgin glass fiber, (iic) glass flake, and any combination thereof,
- from 2 wt. % to 15 wt. % of the component (iii), and
- from 0 wt. % to 15 wt. % of one or more components (iv) different than the components (i), (ii) and (iii),

wherein the composition (C) has a PCF of at most 1.27 kg $CO_2$/kg and a recycled content of at least 40 wt. %.

**4.** The composition (C) according to any one of claims 1 to 3, comprising the following components:

- from 43 wt. % to 88 wt. % of the component (i);
- from 10 wt. % to 55 wt. % of the component (ii) selected from the group consisting of (iia) recycled glass fiber, (iib) virgin glass fiber, (iic) glass flake, and any combination thereof,
- from 0 wt. % to 15 wt. % of the component (iii); and
- from 0 wt. % to 15 wt. % of the component (iv) different than the components (i), (ii) and (iii),

wherein the composition (C) has a PCF of at most 1.25 kg $CO_2$/kg and a recycled content of at least 43 wt. %, or

- from 48 wt. % to 88 wt. % of the component (i),
- from 10 wt. % to 50 wt. % of the component (ii) selected from the group consisting of (iia) recycled glass fiber, (iib) virgin glass fiber, (iic) glass flake, and any combination thereof,
- from 2 wt. % to 15 wt. % of the component (iii), and
- from 0 wt. % to 15 wt. % of one or more components (iv) different than the components (i), (ii) and (iii),

wherein the composition (C) has a PCF of at most 1.21 kg $CO_2$/kg and a recycled content of at least 48 wt. %.

**5.** The composition (C) according to any one of claims 1 to 4, comprising the following components:

- from 50 wt. % to less than 86 wt. % of the component (i),
- from 10 wt. % to less than 46 wt. % of recycled glass fiber as component (iia);
- from 4 wt. % to 15 wt. % of the component (iii), and
- from 0.1 wt. % to 10 wt. % of one or more components (iv),

wherein the composition (C) has a PCF of at most 1.18 kg $CO_2$/kg and a recycled content of at least 50 wt. %.

**6.** The composition (C) according to any one of claims 1 to 5, wherein the component (ii) is made from E-glass.

**7.** The composition (C) according to any one of claims 1 to 6, wherein the component (ii) is a recycled glass fiber (iia).

**8.** The composition (C) according to any one of claims 1 to 7, wherein the component (iii) is an impact modifier which is an ethylene-based acrylate copolymer, a styrene-based acrylate copolymer, or a core-shell type acrylate based polymer, being functionalized with glycidyl acrylate or methacrylate, preferably selected from the group consisting of

poly(ethylene-co-glycidylmethacrylate) copolymers,
poly(ethylene-co-methyl(meth)acrylate-co-glycidyl acrylate) copolymers,
poly(ethylene-co-n-butyl acrylate-co-glycidyl acrylate) copolymers,
copolymers of styrene and glycidyl (meth)acrylates,
a core-shell type acrylate based polymer comprised of a core primarily comprised of cross-linked poly(n-butyl acrylate) rubber and of a shell comprised primarily of a poly(methyl methacrylate)-poly(glycidyl methacrylate) copolymer; and
any combination thereof.

**9.** The composition (C) according to any one of claims 1 to 8, wherein the component (iii) includes, as impact modifier, an ethylene-based acrylate copolymer containing glycidyl methacrylate.

**10.** The composition (C) according to any one of claims 1 to 9, wherein the component (iv) includes an additive selected from the group consisting of UV light stabilizers, light stabilizers, antioxidants, and combinations thereof,

said UV light stabilizer being selected from the group consisting of benzotriazole stabilizers, triazine stabilizers, benzophenone stabilizers, hindered amine stabilizers, cyanoacrylate stabilizers, salicylate stabilizers, benzoate stabilizers, oxanilide stabilizers, acrylate or malonate stabilizers, oxamide stabilizers, and any combination thereof, preferably selected from the group consisting of benzotriazole stabilizers, triazine stabilizers, hindered amine stabilizers, and any combination thereof,

said antioxidant stabilizer being selected from the group consisting of hindered phenol stabilizers, phosphite ester stabilizers, phosphonite stabilizers, thioether stabilizers, and any combination thereof, preferably selected from the group consisting of hindered phenol stabilizers, phosphite ester stabilizers, and any combination thereof

**11.** The composition (C) according to any one of claims 1 to 10, wherein
when the composition (C) does not comprise the component (iii), the composition (C) has a PCF of from 0.64 kg $CO_2$/kg to 1.30 kg $CO_2$/kg, preferably from 0.66 kg $CO_2$/kg to 1.28 kg $CO_2$/kg, more preferably from 0.66 kg $CO_2$/kg to 1.26 kg $CO_2$/kg; or
when the composition (C) comprises from 5 to 15 wt.% of the component (iii), the composition (C) has a PCF of from 0.64 kg $CO_2$/kg to 1.28 kg $CO_2$/kg, preferably from 0.66 kg $CO_2$/kg to 1.27 kg $CO_2$/kg, more preferably from 0.66 kg $CO_2$/kg to 1.26 kg $CO_2$/kg.

**12.** A method for making the sustainable reinforced polyester composition according to any one of claims 1 to 11, comprising melt processing, preferably melt-blending, the components (i) and (ii), the optional component (iii) and any one or more optional components (iv).

**13.** An article comprising, or made from, the sustainable reinforced polyester composition of any one of claims 1 to 12, being shaped by extrusion molding, injection molding, and/or compression molding, preferably by injection molding.

**14.** The article of claim 13, being a component of a mobile electronic device.

**15.** The article of claim 14, wherein the mobile electronic device is a wearable mobile electronic device or a non-wearable mobile electronic device,

said wearable mobile electronic device being selected from the group consisting of micro-chips, sports trackers, smart watches, smart glasses or other smart eye-wear, headphones, earbuds and other wearable ear-wear, a smart strap, a watch band, on-body cameras, heart rate meters, XR devices (e.g., Augmented Reality (AR) devices, Mixed Reality (MR) devices, Virtual Reality (VR) devices), such as head-mounted display (HMD), AR/VR/MR headsets, AR/VR/MR glasses, and industrial wearable equipment; preferably selected from the group consisting of smart watches, on-body cameras, smart eye-wear, XR devices, such as head-mounted display (HMD), AR/VR/MR headsets, AR/VR/MR glasses,

said non-wearable mobile electronic device being selected from the group consisting of a mobile electronic phone, a smartphone, a personal digital assistant, a laptop computer, a tablet computer, a radio, a camera and camera accessories, a drone, a mobile speakerphone, a smart medical device, a calculator, a music player, a video player, an e-book reader, a global positioning system receiver, a gaming equipment such as a portable game console and console accessories, a hard drive and other electronic storage devices; preferably selected from the group consisting of laptop computers, tablet computers, mobile electronic phones, smartphones, mobile speakerphones, smart medical devices, a radio, a camera and camera accessories, a drone, a mobile speakerphone, a smart medical device, a calculator, a music player, a video player, an e-book reader, and a global positioning system receiver.

Europäisches Patentamt
European Patent Office
Office européen des brevets

# EUROPEAN SEARCH REPORT

Application Number
EP 25 15 5788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 574 889 A1 (SIPCHEM INNOVENT SA [CH]) 25 June 2025 (2025-06-25)<br>* claims 11-15 *<br>* paragraph [0081] - paragraph [0085] * | 1,2,4,6, 8-10,12, 13 | INV.<br>B29C45/00<br>B29C48/00<br>C08J11/06<br>C08K3/013<br>C08K3/04<br>C08K3/30<br>C08K5/00<br>C08K5/134<br>C08K5/3435<br>C08K5/3475<br>C08K5/526<br>C08K7/14<br>C08L67/02<br><br>ADD.<br>C08G63/183 |
| X | US 2024/158631 A1 (LIAO TE-CHAO [TW] ET AL) 16 May 2024 (2024-05-16) | 1,4,8-13 | |
| A | * paragraph [0009] - paragraph [0018]; claims 5-11 *<br>* paragraph [0043] - paragraph [0045]; table 1 * | 2,5-7, 14,15 | |
| X | US 2024/199797 A1 (LIAO TE-CHAO [TW] ET AL) 20 June 2024 (2024-06-20) | 1,4,6, 10-13 | |
| A | * paragraph [0027] - paragraph [0031]; claims 9, 10 * | 2,5,7-9, 14,15 | |
| X | US 2024/317994 A1 (SUZUKI TAKAYUKI [JP] ET AL) 26 September 2024 (2024-09-26) | 1,2,6, 8-10, 12-15 | TECHNICAL FIELDS SEARCHED (IPC) |
| A | * paragraph [0393] *<br>* table 1 *<br>* table 10 *<br>* examples 3-6 * | 4,5,7,11 | C08J<br>B29C<br>C08G<br>C08K<br>C08L |
| X | CN 117 460 783 A (LG CHEMICAL LTD) 26 January 2024 (2024-01-26) | 1,6, 10-13 | |
| A | * paragraph [0194] - paragraph [0208] *<br>* paragraph [0214] - paragraph [0218] * | 2,4,5, 7-9,14, 15 | |

The present search report has been drawn up for all claims

| Place of search | Date of completion of the search | Examiner |
|---|---|---|
| The Hague | 27 August 2025 | Enescu, Cristina |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 15 5788

This annex lists the patent family members relating to the patent documents cited in the above-mentioned European search report. The members are as contained in the European Patent Office EDP file on
The European Patent Office is in no way liable for these particulars which are merely given for the purpose of information.

27-08-2025

| Patent document cited in search report | Publication date | Patent family member(s) | Publication date |
|---|---|---|---|
| EP 4574889 A1 | 25-06-2025 | EP 4574889 A1 | 25-06-2025 |
| | | WO 2025132528 A1 | 26-06-2025 |
| US 2024158631 A1 | 16-05-2024 | CN 118027618 A | 14-05-2024 |
| | | JP 2024070775 A | 23-05-2024 |
| | | TW 202419567 A | 16-05-2024 |
| | | US 2024158631 A1 | 16-05-2024 |
| US 2024199797 A1 | 20-06-2024 | CN 118185247 A | 14-06-2024 |
| | | JP 2024085362 A | 26-06-2024 |
| | | TW 202424105 A | 16-06-2024 |
| | | US 2024199797 A1 | 20-06-2024 |
| US 2024317994 A1 | 26-09-2024 | EP 4442763 A1 | 09-10-2024 |
| | | TW 202336151 A | 16-09-2023 |
| | | US 2024317994 A1 | 26-09-2024 |
| | | WO 2023100896 A1 | 08-06-2023 |
| CN 117460783 A | 26-01-2024 | CN 117460783 A | 26-01-2024 |
| | | EP 4310145 A1 | 24-01-2024 |
| | | KR 20230164287 A | 04-12-2023 |
| | | US 2024317991 A1 | 26-09-2024 |
| | | WO 2023229132 A1 | 30-11-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20210139694 A, H. Toshio


### Non-patent literature cited in the description


- **M. FROUNCHI'S**. Studies on Degradation of PET in Mechanical Recycling. *Macromolecular Symposia*, 2011, vol. 144 (1), 465-469
- **SCHYNS** ; **SHAVER'S**. Mechanical Recycling of Packaging Plastics: A review. *Macromolecular Rapid Communication*, 2021, vol. 42, 2000415
- **MAHSA BABAEI et al.** Chemical recycling of Polyethylene terephthalate: A mini-review. *Journal of Environmental Chemical Engineering*, 2024, vol. 12 (3), 112507
- **MURPHY J.** Additives for Plastics Handbook. 2001, 43-48
- Composites. **WALLENBERGER et al.** ASM Handbook. 2001, vol. 21, 27-34
- Fiberglass and Glass Technology. 2010, vol. XIV, 197-225